# EUROPEAN PATENT APPLICATION

(11) **EP 4 358 378 A1**
(43) Date of publication of application: **24.04.2024**
(21) Application number: 23203244.1
(22) Date of filing: 12.10.2023
(51) Int. Cl.: H02K 15/02, H02K 15/04

(54) **STATOR FOR ROTATING ELECTRIC MACHINE**

(30) Priority: 14.10.2022 JP 2022165785; 31.05.2023 JP 2023090354; 04.10.2023 JP 2023173141
(71) Applicant: DENSO CORPORATION, Aichi-pref. 448-8661 (JP); Denso Presstech Co., Ltd., Toyokawa City, Aichi Prefecture 441-0201 (JP)
(72) Inventor: KONDO, Keiji, Kariya-city 448-8661 (JP); KUDOSE, Yuichi, Kariya-city 448-8661 (JP); KUROZAKI, Hirotaka, Kariya-city 448-8661 (JP); OHIRA, Masaki, Aichi Prefecture 441-0201 (JP); MATSUMOTO, Ryosuke, Aichi Prefecture 441-0201 (JP); TAKESHITA, Shinji, Aichi Prefecture 441-0201 (JP); KURAMITSU, Takashi, Aichi Prefecture 441-0201 (JP); HASHIMOTO, Tomohiro, Aichi Prefecture 441-0201 (JP); YOSHIDA, Koji, Aichi Prefecture 441-0201 (JP); GOTO, Katsuhiko, Aichi Prefecture 441-0201 (JP)
(74) Representative: TBK

(57) **Abstract**

A stator (10) for a rotating electric machine includes a stator core (11) and a stator coil (12). The stator core is formed of a band-shaped steel sheet (20) that is helically bent and laminated. The stator core has a plurality of slots (23) each opening at an inner periphery of the stator core and spaced from one another in a circumferential direction. The stator coil is formed of a plurality of electrical conductor segments (30) that are inserted in the slots of the stator core and connected with one another. Moreover, the band-shaped steel sheet has a plurality of slits (25) each of which is formed, at a position corresponding to one of the slots, to be open to the corresponding slot. Each of the electrical conductor segments is substantially U-shaped and has a pair of leg portions (31) respectively inserted in corresponding two of the slots of the stator core; the corresponding two slots are circumferentially apart from each other by two or more slot-pitches.

## Description

### BACKGROUND

### 1 Technical Field

The present disclosure relates to stators for rotating electric machines.

### 2 Description of Related Art

Conventionally, stators for rotating electric machines have been known which include a stator core formed of a straight core (see, for example, Japanese Patent No. JP3681487B2). Specifically, the straight core is formed by laminating a plurality of core sheets. Each of the core sheets has a band-shaped back yoke extending straight, a plurality of teeth each protruding from a long side portion of the back yoke, and a plurality of V-shaped notches each of which is formed in the long side portion of the back yoke so as to be located between an adjacent pair of the teeth. Further, the straight core is bent, at the notches, into a ring shape, thereby forming the stator core.

### SUMMARY

However, in the conventional stators as described above, due to springback of the straight core, side surfaces (or mating surfaces) of each of the notches which face each other may become separated from each other, thereby lowering magnetic properties of the stator core. Here, springback of the straight core denotes the tendency of the straight core, which has been bent at the notches into a ring shape, to revert to its original straight shape.

The present disclosure has been accomplished in view of the above problem with the conventional stators.

It is a primary object of the present disclosure to suppress, in a stator which includes a stator core formed by helically bending and laminating a band-shaped steel sheet, mating surfaces of each of slits formed in the band-shaped steel sheet from being separated from each other due to springback of the band-shaped steel sheet.

According to the present disclosure, there is provided a first stator for a rotating electric machine. The first stator includes a stator core and a stator coil. The stator core is formed of a band-shaped steel sheet that is helically bent and laminated. The stator core has a plurality of slots each opening at an inner periphery of the stator core and spaced from one another in a circumferential direction. The stator coil is formed of a plurality of electrical conductor segments. The electrical conductor segments have respective leg portions inserted in the slots of the stator core and connected with one another. In the band-shaped steel sheet, for each of at least some of the slots, there is formed at least one slit, at a position corresponding to the slot, to be open to the slot. At one or more locations in the first stator, a pair of the leg portions of the electrical conductor segments are connected with each other across at least one of those slots for each of which the at least one slit is formed to be open to the slot.

With the above configuration of the first stator according to the present disclosure, when the band-shaped steel sheet is helically bent and laminated to form the stator core, the band-shaped steel sheet can be easily deformed such that a pair of side surfaces (or slit mating surfaces) of each of the at least one slit, which face each other, become closer to each other. However, after the formation of the stator core, the slit mating surfaces may be separated from each other due to springback of the band-shaped steel sheet, thereby lowering magnetic properties of the stator core. Here, springback of the band-shaped steel sheet denotes the tendency of the band-shaped steel sheet, which has been helically bent and laminated to form the stator core, to revert to its original straight shape.

In this regard, at one or more locations in the first stator according to the present disclosure, a pair of the leg portions of the electrical conductor segments are connected with each other across at least one of those slots for each of which the at least one slit is formed to be open to the slot. In general, in the state of being respectively inserted in a pair of the slots of the stator core, the pair of leg portions apply to the stator core forces in the directions of urging the pair of leg portions to approach each other. Consequently, for the at least one slit corresponding to the at least one slot across which the pair of the leg portions of the electrical conductor segments are connected with each other, forces are applied by the pair of the leg portions to urge the slit mating surfaces of each of the at least one slit to become closer to each other. As a result, the slit mating surfaces are suppressed from being separated from each other due to springback of the band-shaped steel sheet.

According to the present disclosure, there is also provided a second stator for a rotating electric machine. The second stator includes a stator core and a stator coil. The stator core is formed of a band-shaped steel sheet that is helically bent and laminated. The stator core has a plurality of slots each opening at an inner periphery of the stator core and spaced from one another in a circumferential direction. The stator coil is formed of a plurality of electrical conductor segments that are inserted in the slots of the stator core and connected with one another. Moreover, the band-shaped steel sheet has a plurality of slits each of which is formed, at a position corresponding to one of the slots, to be open to the corresponding slot. Each of the electrical conductor segments is substantially U-shaped and has a pair of leg portions respectively inserted in corresponding two of the slots of the stator core; the corresponding two slots are circumferentially apart from each other by two or more slot-pitches.

With the above configuration of the second stator according to the present disclosure, when the band-shaped steel sheet is helically bent and laminated to form the stator core, the band-shaped steel sheet can be easily deformed such that a pair of side surfaces (or slit mating surfaces) of each of the slits, which face each other, become closer to each other. However, after the formation of the stator core, the slit mating surfaces may be separated from each other due to springback of the band-shaped steel sheet, thereby lowering magnetic properties of the stator core. Here, springback of the band-shaped steel sheet denotes the tendency of the band-shaped steel sheet, which has been helically bent and laminated to form the stator core, to revert to its original straight shape.

In this regard, in the second stator according to the present disclosure, each of the electrical conductor segments is substantially U-shaped and has the pair of leg portions respectively inserted in the corresponding two slots of the stator core which are circumferentially apart from each other by two or more slot-pitches. In general, in the state of being respectively inserted in the corresponding two slots of the stator core, the pair of leg portions apply to the stator core forces in the directions of urging the pair of leg portions to approach each other. Moreover, each corresponding pair of the leg portions, which respectively belong to two different electrical conductor segments, are joined to each other. In the state of being jointed to each other, each corresponding pair of the leg portions also apply to the stator core forces in the directions of urging the corresponding pair of the leg portions to approach each other. Consequently, for the one or more slits corresponding to the one or more slots sandwiched between a connected or joined pair of the leg portions of the electrical conductor segments, forces are applied by the connected or joined pair of the leg portions to urge the slit mating surfaces of each of the one or more slits to become closer to each other. As a result, the slit mating surfaces are suppressed from being separated from each other due to springback of the band-shaped steel sheet.

In addition, with the above configuration of the second stator according to the present disclosure, between the pair of leg portions of each of the electrical conductor segments, there are interposed one or more slots. Moreover, for each of the slots, there is formed a corresponding one of the slits. Consequently, each of the electrical conductor segments can exert the effect of suppressing separation of the slit mating surfaces for one or more slits.

In further implementations of the first and second stators according to the present disclosure, for each of the slits, a recess may be formed in one of the pair of side surfaces of the slit; and a protrusion may be formed on the other of the pair of side surfaces and press-fitted in the recess. In this case, with engagement between the recess and the protrusion, it will become possible to more effectively suppress separation of the slit mating surfaces (i.e., the pair of side surfaces) from each other.

Simultaneously or alternatively, for each of the slits, a first engagement portion may be formed in one of the pair of side surfaces of the slit; and a second engagement portion may be formed in the other of the pair of side surfaces and engaged with the first engagement portion. In this case, with engagement between the first engagement portion and the second engagement portion, it will become possible to more effectively suppress separation of the slit mating surfaces (i.e., the pair of side surfaces) from each other.

For each of the slits, there may be formed an indentation in an outer edge portion of the band-shaped steel sheet at a position corresponding to an end of the slit on an opposite side to the corresponding slot. In this case, it will become possible to reduce that portion (i.e., outer edge portion) of the band-shaped steel sheet where tensile stress remains; the tensile stress is generated when the band-shaped steel sheet is helically bent and laminated to form the stator core. Consequently, it will become possible to reduce the amount of springback of the band-shaped steel sheet.

Further, the stator core may have a back yoke extending in the circumferential direction and a plurality of teeth extending radially inward from the back yoke and spaced from one another in the circumferential direction. Each of the slots may be formed between a circumferentially-adjacent pair of the teeth. For each of the slits, the end of the slit on the opposite side to the corresponding slot may be located radially outside and in radial alignment with a corresponding one of the teeth. In this case, when magnetic flux flowing through the back yoke in the circumferential direction is blocked by the indentation formed in the outer edge portion of the band-shaped steel sheet, the magnetic flux can be bypassed to that part of the back yoke which is radially interposed between the end of the slit on the opposite side to the corresponding slot and the corresponding tooth, thereby being allowed to continue flowing in the circumferential direction. Consequently, it will become possible to suppress the magnetic properties of the stator core from being lowered due to magnetic saturation.

Each of the number of the slots and the number of the slits may be set to be greater than or equal to 48. In this case, it will become possible to reduce the amount of deformation of the band-shaped steel sheet at the positions corresponding to the slits when the band-shaped steel sheet is helically bent and laminated to form the stator core. Consequently, it will become possible to reduce the force of springback of the band-shaped steel sheet while suppressing the magnetic properties of the stator core from being lowered. Moreover, it will become easy to increase the number of the slots interposed between the pair of leg portions of each of the electrical conductor segments; thus, it will become possible to suppress separation of the slit mating surfaces of each of the slits using more than one electrical conductor segment.

For each of the slits, each of the pair of side surfaces of the slit may be arc-shaped. In this case, when the band-shaped steel sheet is helically bent and laminated to form the stator core, the difference in shape between the slit mating surfaces (i.e., the pair of side surfaces) due to manufacturing tolerances can be easily absorbed by the slit mating surfaces being deformed to change the curvatures thereof. Consequently, the entire slit mating surfaces can be easily brought into intimate contact with each other, thereby improving the magnetic properties of the stator core.

Further, for each of the slits, the pair of side surfaces of the slit may consist of a first side surface and a second side surface that is deformed later than the first side surface when the band-shaped steel sheet is helically bent and laminated to form the stator core. The radius of curvature of the second side surface may be set to be greater than the radius of curvature of the first side surface. In this case, when the band-shaped steel sheet is helically bent and laminated to form the stator core, the second side surface can be deformed in such as manner as to conform to the first side surface. Consequently, the entire slit mating surfaces can be more easily brought into intimate contact with each other, thereby improving the magnetic properties of the stator core.

The stator core may have a polygonal prism shape. A case may be fitted under pressure on an outer periphery of the stator core. In this case, the corner portions of the polygonal prism-shaped stator core will be compressed by the case, thereby reducing the residual tensile stress in the stator core which is caused by the tensile deformation (i.e., bending deformation) of the band-shaped steel sheet. As a result, it will become possible to improve the magnetic properties of the stator core.

The radial positions of outer circumferential surfaces of a plurality of layers of the helically-laminated band-shaped steel sheet may be set to vary in the lamination direction of the band-shaped steel sheet. In this case, it will become possible to increase the area of the radially outer surface of the entire stator core, thereby improving the heat dissipation performance of the stator core.

For each of the slits, there may be formed an indentation in an outer edge portion of the band-shaped steel sheet at a position circumferentially offset from an imaginary line that extends radially outward from the end of the slit on the opposite side to the corresponding slot. In this case, it will become possible to reduce that portion (i.e., outer edge portion) of the band-shaped steel sheet where tensile stress remains; the tensile stress is generated when the band-shaped steel sheet is helically bent and laminated to form the stator core. Consequently, it will become possible to reduce the amount of springback of the band-shaped steel sheet. Moreover, compared to the case of the indentation being formed at a position on the imaginary line, it will become difficult for the band-shaped steel sheet to be broken due to cracks generated at the indentation and reaching the slit.

Simultaneously or alternatively, for each of the slits, there may be formed a protrusion that protrudes radially outward from an outer edge portion of the band-shaped steel sheet at a position corresponding to the end of the slit on the opposite side to the corresponding slot. In this case, it will become possible to increase the radial width of an outer peripheral portion of the back yoke, thereby relaxing stress concentration on the outer peripheral portion due to the bending of the band-shaped steel sheet. Consequently, it will become possible to prevent the outer peripheral portion from being broken due to stress concentration on the outer peripheral portion. Moreover, it will also become possible to suppress reduction in the radial width of the outer peripheral portion of the back yoke when the outer peripheral portion is stretched in the circumferential direction. Here, the outer peripheral portion denotes a portion of the back yoke which extends between the ends of the slits on the opposite side to the corresponding slots and a radially outer edge of the back yoke.

Simultaneously or alternatively, for each of the slits, there may be formed a circumferential slit that extends, from the end of the slit on the opposite side to the corresponding slot, to both sides in the circumferential direction. In this case, it will become possible to expand the area where stress concentration occurs due to the bending of the band-shaped steel sheet to the area where the circumferential slit is formed. Consequently, it will become possible to reduce the average stress in the area where stress concentration occurs due to the bending of the band-shaped steel sheet. As a result, it will become possible to prevent the outer peripheral portion of the back yoke from being broken due to stress concentration on the outer peripheral portion.

Simultaneously or alternatively, for each of the slits, there may be formed a first circular hole at the end of the slit on the opposite side to the corresponding slot. Further, at least one second circular hole may be formed so as to be connected with a portion of the first circular hole which is away from an end of the first circular hole on an opposite side to the slit; the at least one second circular hole is smaller than the first circular hole. In this case, it will become possible to expand the area where stress concentration occurs due to the bending of the band-shaped steel sheet to the area(s) where the at least one second circular hole is formed. Consequently, it will become possible to reduce the average stress in the area where stress concentration occurs due to the bending of the band-shaped steel sheet. As a result, it will become possible to prevent the outer peripheral portion of the back yoke from being broken due to stress concentration on the outer peripheral portion.

### BRIEF DESCRIPTION OF THE DRAWINGS

FIG 1 is a perspective view of a stator according to an exemplary embodiment.
FIG 2 is a front view of the stator and a case.
FIG 3 is a plan view illustrating a manner of helically bending and laminating a band-shaped steel sheet into a stator core according to the embodiment.
FIGS. 4A and 4B are enlarged views respectively showing part of the band-shaped steel sheet before and after the band-shaped steel sheet is helically bent.
FIG 5 is a perspective view illustrating a manner of inserting a plurality of electrical conductor segments, which together form a stator coil, into corresponding slots of the stator core.
FIG 6 is a perspective view showing part of the stator core and a pair of the electrical conductor segments before being inserted into the corresponding slots of the stator core.
FIG 7 is a schematic view showing some of the electrical conductor segments received in the corresponding slots of the stator core.
FIG 8 is an enlarged view showing part of the band-shaped steel sheet after the band-shaped steel sheet is helically bent.
FIG 9 is a graph illustrating the relationship between tensile stress remaining in the stator core and iron loss of the stator core.
FIGS. 10A and 10B are enlarged views respectively showing part of a band-shaped steel sheet according to a first modification before and after the band-shaped steel sheet is helically bent.
FIGS. 11A and 11B are enlarged views respectively showing part of a band-shaped steel sheet according to a second modification before and after the band-shaped steel sheet is helically bent.
FIG 12 is an enlarged view showing part of a band-shaped steel sheet according to a third modification after the band-shaped steel sheet is helically bent.
FIG 13 is an enlarged view showing part of a band-shaped steel sheet according to a fourth modification after the band-shaped steel sheet is helically bent.
FIGS. 14A and 14B are enlarged views respectively showing part of a band-shaped steel sheet according to a fifth modification before and after the band-shaped steel sheet is helically bent.
FIG 15 is an enlarged view illustrating an advantageous effect achievable with the band-shaped steel sheet according to the fifth modification.
FIG 16 is an enlarged view showing part of a band-shaped steel sheet according to a sixth modification before the band-shaped steel sheet is helically bent.
FIGS. 17A and 17B are enlarged views respectively showing part of a band-shaped steel sheet according to a seventh modification before and after the band-shaped steel sheet is helically bent.
FIGS. 18A and 18B are enlarged views respectively showing part of a band-shaped steel sheet according to an eighth modification before and after the band-shaped steel sheet is helically bent.
FIGS. 19A and 19B are enlarged views respectively showing part of a band-shaped steel sheet according to a ninth modification before and after the band-shaped steel sheet is helically bent.
FIGS. 20A and 20B are enlarged views respectively showing part of a band-shaped steel sheet according to a tenth modification before and after the band-shaped steel sheet is helically bent.
FIGS. 21A and 21B are enlarged views respectively showing part of a band-shaped steel sheet according to an eleventh modification before and after the band-shaped steel sheet is helically bent.
FIG 22 is an enlarged view showing part of a band-shaped steel sheet according to a twelfth modification after the band-shaped steel sheet is helically bent.
FIGS. 23A and 23B are enlarged views respectively showing part of a band-shaped steel sheet according to a thirteenth modification before and after the band-shaped steel sheet is helically bent.
FIGS. 24A, 24B and 24C are enlarged views respectively showing part of a band-shaped steel sheet according to a fourteenth modification before the band-shaped steel sheet is helically bent, after the band-shaped steel sheet is helically bent and before protrusions formed on slit surfaces of the band-shaped steel sheet are plastically deformed, and after the protrusions are plastically deformed.
FIGS. 25A and 25B are enlarged views respectively showing part of a band-shaped steel sheet according to a fifteenth modification before and after the band-shaped steel sheet is helically bent.
FIGS. 26A and 26B are enlarged views respectively showing part of a band-shaped steel sheet according to a sixteenth modification before and after the band-shaped steel sheet is helically bent.
FIGS. 27A and 27B are enlarged views respectively showing part of a band-shaped steel sheet according to a seventeenth modification before and after the band-shaped steel sheet is helically bent.
FIGS. 28A and 28B are enlarged views respectively showing part of a band-shaped steel sheet according to an eighteenth modification before and after the band-shaped steel sheet is helically bent.
FIG 29A is a perspective view of a stator core according to a nineteenth modification, and FIG 29B is an enlarged view of a part R of FIG 29A.
FIGS. 30A and 30B are enlarged views respectively showing part of a band-shaped steel sheet according to a twentieth modification before and after the band-shaped steel sheet is helically bent.
FIGS. 31A and 31B are enlarged views respectively showing part of a band-shaped steel sheet according to a twenty-first modification before and after the band-shaped steel sheet is helically bent.
FIGS. 32A and 32B are enlarged views respectively showing part of a band-shaped steel sheet according to a twenty-second modification before and after the band-shaped steel sheet is helically bent.
FIG 33 is an enlarged view showing part of a band-shaped steel sheet according to a twenty-third modification before the band-shaped steel sheet is helically bent.
FIGS. 34A and 34B are enlarged views respectively showing part of a band-shaped steel sheet according to a twenty-fourth modification before and after the band-shaped steel sheet is helically bent.
FIGS. 35A and 35B are enlarged views respectively showing part of a band-shaped steel sheet according to a twenty-fifth modification before and after the band-shaped steel sheet is helically bent.
FIGS. 36A and 36B are enlarged views respectively showing part of a band-shaped steel sheet according to a twenty-sixth modification before and after the band-shaped steel sheet is helically bent.
FIGS. 37A and 37B are enlarged views respectively showing part of a band-shaped steel sheet according to a twenty-seventh modification before and after the band-shaped steel sheet is helically bent.
FIGS. 38A and 38B are enlarged views respectively showing part of a band-shaped steel sheet according to a twenty-eighth modification before and after the band-shaped steel sheet is helically bent.
FIG 39 is an enlarged view showing part of a band-shaped steel sheet according to a twenty-ninth modification before the band-shaped steel sheet is helically bent.
FIG 40 is an enlarged view showing part of a band-shaped steel sheet according to a thirtieth modification before the band-shaped steel sheet is helically bent.

### DESCRIPTION OF EMBODIMENTS

Hereinafter, an exemplary embodiment, in which a stator according to the present disclosure is embodied as a stator of a rotating electric machine installed in a vehicle (e.g., a hybrid vehicle or an electric vehicle), will be described with reference to the drawings. In addition, in the following embodiment and modifications, identical or equivalent parts will be designated by the same reference signs in the drawings; and explanation thereof will not be repeated.

The rotating electric machine may be, for example, an electric motor, an electric generator or a motor-generator that selectively functions either as an electric motor or as an electric generator. More particularly, the rotating electric machine may be configured as a permanent magnet synchronous motor, a field coil synchronous motor or an induction motor.

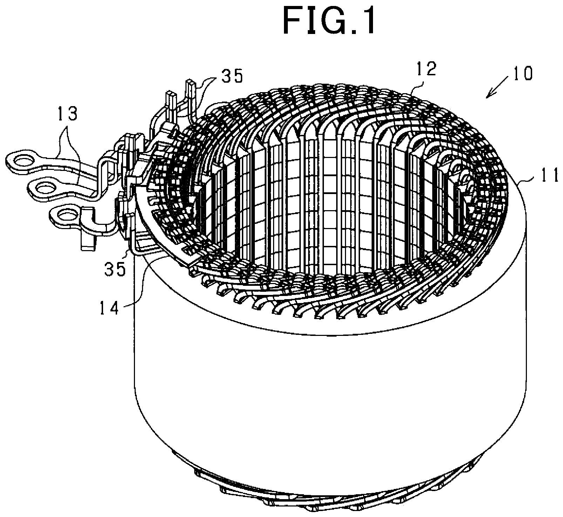

In the present embodiment, the rotating electric machine includes a substantially cylindrical stator 10 as shown in FIG 1, and a rotor (not shown) arranged radially inside the stator 10. More specifically, the rotor is arranged to be rotatable about a rotation axis relative to the stator 10.

Hereinafter, the axial direction of the stator 10, which coincides with the direction of the rotation axis of the rotor, will be simply referred to as the axial direction; the radial directions of the stator 10, which coincide with the directions of extending radially from the rotation axis of the rotor, will be simply referred to as the radial directions; and the circumferential direction of the stator 10, which coincides with the direction of extending along a circle whose center is on the rotation axis of the rotor, will be simply referred to as the circumferential direction.

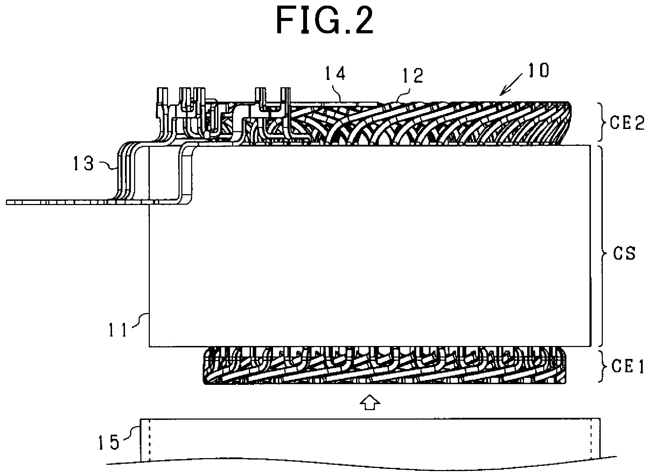

As shown in FIGS. 1 and 2, the stator 10 includes a substantially annular stator core 11 and a stator coil 12 wound on the stator core 11. As mentioned above, in the present embodiment, the rotor (not shown) is rotatably arranged radially inside the stator 10. That is, the rotating electric machine, in which the stator 10 is employed, is an inner rotor type rotating electric machine.

The stator coil 12 is a three-phase coil which includes a U-phase winding, a V-phase winding and a W-phase winding. The U-phase, V-phase and W-phase windings are Y-connected (i.e., star-connected) to define a neutral point therebetween.

Moreover, the stator 10 also includes three electric power input/output busbars 13 and a neutral busbar 14. Each of the U-phase, V-phase and W-phase windings of the stator coil 12 has a first end connected with a corresponding one of the three electric power input/output busbars 13 and a second end connected with the neutral busbar 14.

Although not shown in the drawings, the stator coil 12 is supplied with three-phase AC power from an inverter that converts DC power from a power supply into the three-phase AC power. With supply of the three-phase AC power to the stator coil 12, magnetic flux is generated by the stator 10.

In addition, as shown in FIG 2, the stator coil 12 as a whole has a coil main part CS located in the same axial range as the stator core 11 and a pair of first and second coil end parts CE1 and CE2 located respectively on opposite axial sides of the stator core 11.

A case 15 is shrink-fitted (or fitted under pressure) on a radially outer periphery of the stator core 11. Specifically, the case 15 is formed of a metal into a cylindrical shape. The stator core 11 has an outer diameter slightly greater than an inner diameter of the case 15. In assembling the case 15 to the stator core 11, the case 15 is first heated and thereby expanded. Then, the stator core 11 is fitted into the case 15. Thereafter, the case 15 is cooled so that the stator core 11 and the case 15 are fixed together. In addition, in the case 15, there are formed grooves through which the electric power input/output busbars 13 extend. Alternatively, the electric power input/output busbars 13 may be arranged at locations where they do not interfere with the case 15.

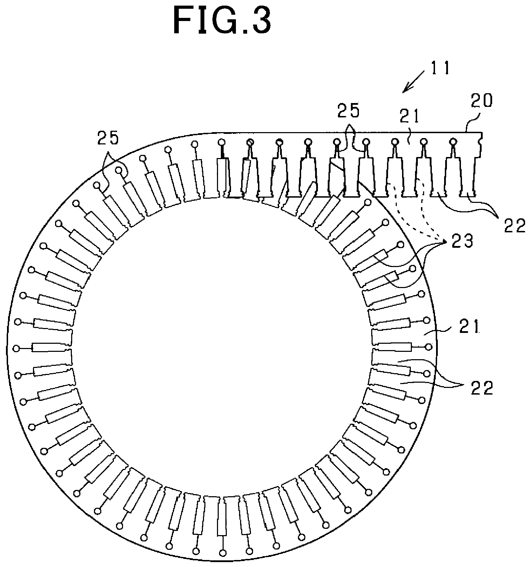

As shown in FIG. 3, the stator core 11 is formed by helically bending and laminating a band-shaped steel sheet 20. More specifically, the stator core 11 is formed by helically bending the band-shaped steel sheet 20 while laminating the layers (or turns) of the helically-bent band-shaped steel sheet 20 into a substantially annular shape. The band-shaped steel sheet 20 may be formed of, for example, a magnetic steel sheet. Before being helically bent, the band-shaped steel sheet 20 extends straight in its longitudinal direction. The stator core 11 formed of the helically-bent band-shaped steel sheet 20 has a polygonal prism shape, more particularly a 48-gonal prism shape in the present embodiment.

The stator core 11 has a substantially annular back yoke 21, a plurality of teeth 22 and a plurality of slots 23. The teeth 22 each protrude radially inward from the back yoke 21, and are arranged at predetermined intervals in the circumferential direction. Each of the slots 23 is formed between a circumferentially-adjacent pair of the teeth 22. Specifically, each of the slots 23 extends with its longitudinal direction coinciding with the radial direction and has an opening at a radially inner periphery of the stator core 11. Moreover, the slots 23 are formed in the stator core 11 at equal intervals in the circumferential direction. The number of the slots 23 is set to be not less than 48, more particularly set to 48 in the present embodiment. The stator coil 12 is wound on the stator core 11 so as to be received in the slots 23. In the 48-gonal prism-shaped stator core 11, for each of the slots 23, there is formed a corresponding slit 25 (more specifically, a corresponding set of axially-overlapping slits 25 of the layers of the helically-laminated band-shaped steel sheet 20). That is, in the 48-gonal prism-shaped stator core 11, there are formed a total of 48 slits 25 at equal intervals in the circumferential direction.

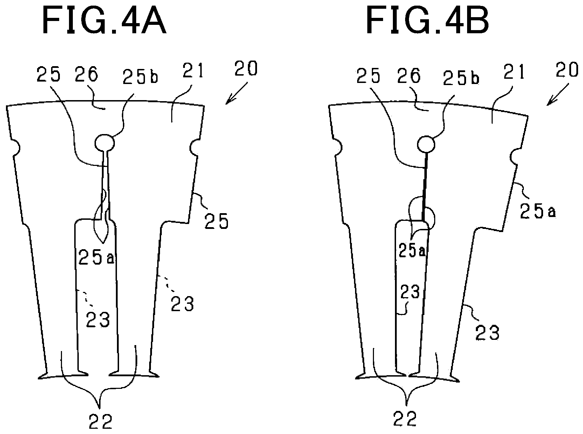

FIGS. 4A and 4B respectively show part of the band-shaped steel sheet 20 before and after the band-shaped steel sheet 20 is helically bent.

In the band-shaped steel sheet 20, each of the slits 25 is formed, at a position corresponding to (more specifically, in radial alignment with) one of the slots 23, to be open to the corresponding slot 23. As shown in FIG 4A, before the band-shaped steel sheet 20 is helically bent, each of the slits 25 has a V-shape spreading from a predetermined position in the back yoke 21 in a width direction of the band-shaped steel sheet 20 (corresponding to the radial direction of the stator core 11) to the corresponding slot 23. Moreover, each of the slits 25 has a pair of planar side surfaces 25a (hereinafter, to be referred to as the slit mating surfaces 25a) facing each other. Furthermore, for each of the slits 25, there is formed a circular hole 25b at an end (or a root) of the slit 25 on the opposite side to the corresponding slot 23.

Referring to FIG 4B, during the bending of the band-shaped steel sheet 20, for each of the slits 25, the band-shaped steel sheet 20 is deformed with the circular hole 25b as a fulcrum such that the slit mating surfaces 25a become closer to each other. Consequently, the slit mating surfaces 25a are brought into contact with each other or located in close proximity to each other. Moreover, in the band-shaped steel sheet 20, the amount of bending deformation of an outer peripheral portion 26 of the back yoke 21, which is located on the opposite side of the circular hole 25b (i.e., the fulcrum of the bending) to the slit 25, is greater than the amounts of bending deformation of other portions of the back yoke 21. Consequently, tensile stress remains in the outer peripheral portion 26 of the back yoke 21.

In addition, if the slit mating surfaces 25a are separated from each other due to springback of the band-shaped steel sheet 20, magnetic properties of the stator core 11 will be lowered. Here, springback of the band-shaped steel sheet 20 denotes the tendency of the band-shaped steel sheet 20, which has been helically bent and laminated to form the stator core 11, to revert to its original straight shape.

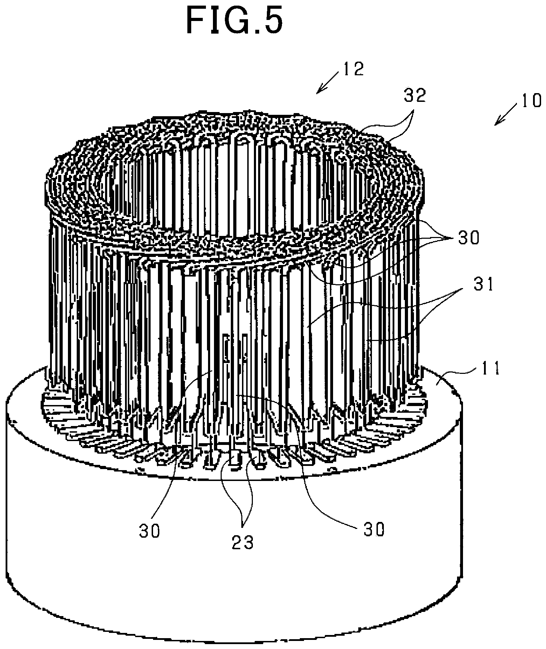

FIG 5 is a perspective view illustrating a manner of inserting a plurality of electrical conductor segments 30, which together form the stator coil 12, into the slots 23 of the stator core 11. The electrical conductor segments 30, which are aligned in a predetermined order into an annular shape, are axially inserted into corresponding ones of the slots 23 of the stator core 11.

The stator coil 12 is formed by connecting the electrical conductor segments 30 in a predetermined pattern. Hereinafter, the segment structure of the stator coil 12 will be described in detail.

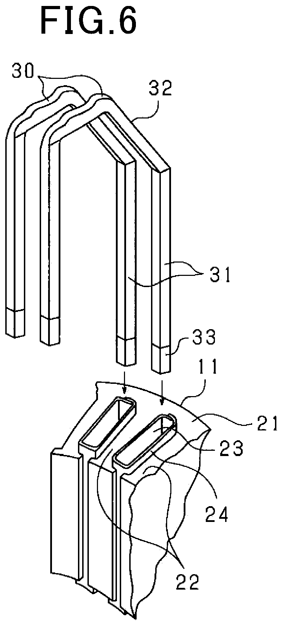

FIG 6 shows part of the stator core 11 and a pair of the electrical conductor segments 30 before being inserted into the corresponding slots 23 of the stator core 11. As shown in FIG 6, each of the electrical conductor segments 30 is substantially U-shaped and has a pair of leg portions 31 and a turn portion 32. The leg portions 31 extend straight in parallel to each other. The turn portion 32 is bent so as to connect the leg portions 31. Moreover, each of the leg portions 31 has a length greater than an axial length of the stator core 11.

In the present embodiment, the electrical conductor segments 30 are obtained by cutting and plastically deforming an electric wire that includes an electrical conductor and an insulating coat. The electrical conductor is formed of an electrically conductive material (e.g., copper) and has a substantially rectangular cross section. The insulating coat is formed of an electrically insulative resin and provided to cover the outer surface of the electrical conductor. Moreover, as shown in FIG 6, the insulating coat is removed from distal end portions of the leg portions 31 of the electrical conductor segments 30. Consequently, the distal end portions of the leg portions 31 of the electrical conductor segments 30 constitute exposed portions 33 where the electrical conductor is exposed from the insulating coat.

In addition, the shape of the electrical conductor segments 30 is not limited to the substantially U-shape. For example, as an alternative, each of the electrical conductor segments 30 may have a wave shape that has a plurality of substantially U-shaped sections connected with one another; that is, each of the electrical conductor segments 30 may have two or more pairs of leg portions 31. As another alternative, each of the electrical conductor segments 30 may have a substantially I-shape; that is, each of the electrical conductor segments 30 may have only a single leg portion 31. Moreover, the electrical conductor segments 30 may be joined to one another by welding or the like, or be formed continuously (or seamlessly) with one another.

In each of the slots 23 of the stator core 11, the electrical conductor segments 30 are inserted so as to be radially aligned in a row. More particularly, in the present embodiment, in each of the slots 23, the leg portions 31 of the electrical conductor segments 30 are radially stacked in four layers.

Moreover, for each of the electrical conductor segments 30, the pair of leg portions 31 of the electrical conductor segment 30 are respectively received in the corresponding two slots 23 of the stator core 11 which are circumferentially apart from each other by two or more slot-pitches (or by a predetermined coil pitch). It should be noted that the term "two slots 23 that are circumferentially apart from each other by two or more slot-pitches" does not denote two circumferentially-adjacent slots 23, but denotes two slots 23 that are circumferentially apart from each other with one or more other slots 23 interposed therebetween. For example, for each of the electrical conductor segments 30, the corresponding two slots 23 of the stator core 11, in which the pair of leg portions 31 of the electrical conductor segment 30 are respectively received, may be circumferentially apart from each other by three to six slot-pitches (i.e., circumferentially apart from each other with two to five other slots 23 interposed therebetween).

Those parts of the leg portions 31 of the electrical conductor segments 30 which are received in the corresponding slots 23 of the stator core 11 together constitute the coil main part CS of the stator coil 12. Furthermore, in each of the slots 23, there is provided an insulating sheet 24 (see FIG 6) to electrically insulate between the stator core 11 and the stator coil 12 (i.e., the electrical conductor segments 30). Specifically, the insulating sheet 24 is bent so as to surround all of the leg portions 31 of the electrical conductor segments 30 inserted in the slot 23. That is, the insulating sheet 24 is interposed between an interior wall surface of the stator core 11 which defines the slot 23 and the leg portions 31 of the electrical conductor segments 30 inserted in the slot 23.

In the present embodiment, for each of the electrical conductor segments 30, the pair of leg portions 31 of the electrical conductor segment 30 are respectively received in the corresponding two slots 23 of the stator core 11 so as to be offset in radial position from each other by one layer. For example, one of the pair of leg portions 31 is located at the nth layer counting from the radially outer side (i.e., from the back yoke 21 side) while the other of the pair of leg portions 31 is located at the (n+1)th layer counting from the radially outer side.

In assembling the electrical conductor segments 30 (i.e., the stator coil 12) to the stator core 11, the leg portions 31 of the electrical conductor segments 30 are inserted into the corresponding slots 23 of the stator core 11 from a first axial side (i.e., the lower side in FIGS. 1 and 2) of the stator core 11 so that parts of the leg portions 31 protrude out of the corresponding slots 23 to a second axial side (i.e., the upper side in FIGS. 1 and 2) of the stator core 11. Then, the protruding parts (i.e., the anti-turn-portion-side parts) of the leg portions 31 are bent in the circumferential direction. Thereafter, each corresponding pair of the protruding parts of the leg portions 31, which respectively belong to two different electrical conductor segments 30, are joined together at the exposed portions 33 thereof. Consequently, on the first axial side of the stator core 11, all the turn portions 32 of the electrical conductor segments 30 together constitute the first coil end part CE1 of the stator coil 12; on the second axial side of the stator core 11, all the protruding parts of the leg portions 31 of the electrical conductor segments 30 together constitute the second coil end part CE2 of the stator coil 12 (see FIG 2). The outlines of the first and second coil end parts CE1 and CE2 are illustrated in FIG 2.

Next, the connection between the electrical conductor segments 30 at the second coil end part CE2 of the stator coil 12 will be described in more detail.

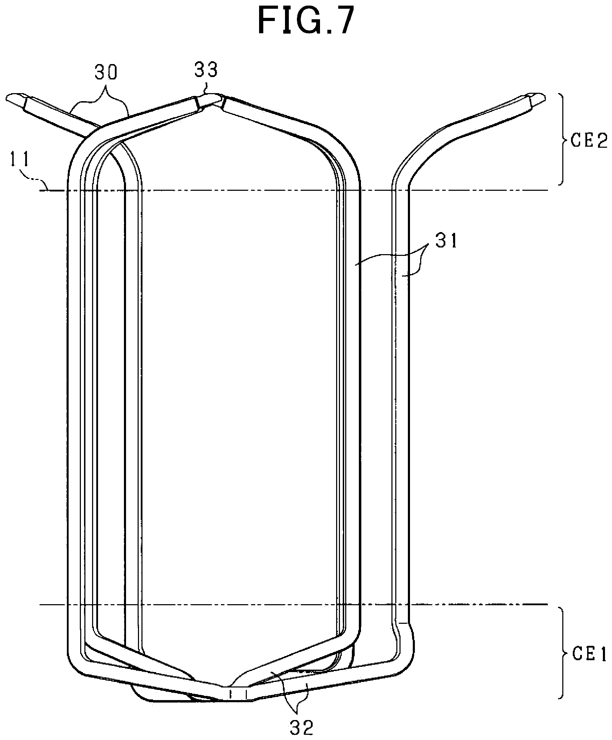

FIG 7 shows some of the electrical conductor segments 30 received in the corresponding slots 23 of the stator core 11. It should be noted that in FIG 7, the stator core 11 is represented by imaginary lines (i.e., two-dot chain lines). In each of the electrical conductor segments 30, the anti-turn-portion-side parts of the pair of leg portions 31 protrude from an axial end face (i.e., the upper end face in FIG 7) of the stator core 11 and are bent in the circumferential direction so as to extend obliquely with a predetermined angle with respect to the axial end face of the stator core 11. Moreover, each corresponding pair of the exposed portions 33 of the electrical conductor segments 30 are joined together by welding, so that the electrical conductor segments 30 are connected to one another.

At the second coil end part CE2 of the stator coil 12, each of those anti-turn-portion-side parts of the leg portions 31 of the electrical conductor segments 30 which extend to one side in the circumferential direction is joined to a corresponding one of those anti-turn-portion-side parts of the leg portions 31 of the electrical conductor segments 30 which extend to the other side in the circumferential direction. Consequently, at the second coil end part CE2, the stator coil 12 has the leg portions 31 of the electrical conductor segments 30 extending obliquely with respect to the axial direction and turned back at predetermined top positions. Moreover, each joined-pair of the leg portions 31 of the electrical conductor segments 30 apply to the stator core 11 forces in the directions of urging the j oined-pair of the leg portions 31 to approach each other. In addition, the anti-turn-portion-side parts of the leg portions 31 of the electrical conductor segments 30 include both those anti-turn-portion-side parts which are bent to the same side as the corresponding turn portions 32 in the circumferential direction and those anti-turn-portion-side parts which are bent to the opposite side to the corresponding turn portions 32 in the circumferential direction.

In the above manner, for each of the U-phase, V-phase and W-phase windings of the stator coil 12, all the electrical conductor segments 30 that together constitute the phase winding are joined and thus electrically connected to one another at the exposed portions 33 thereof; that one of the exposed portions 33 of the electrical conductor segments 30 which is located at the first end of the phase winding is joined and thus electrically connected to the corresponding electric power input/output busbar 13; and that one of the exposed portions 33 of the electrical conductor segments 30 which is located at the second end of the phase winding is joined and thus electrically connected to the neutral busbar 14.

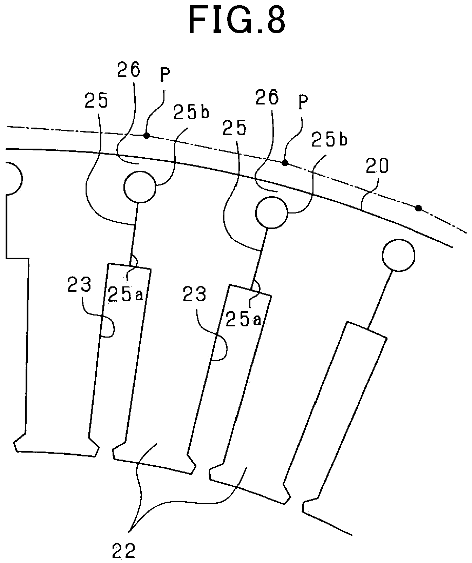

FIG 8 shows part of the band-shaped steel sheet 20 in a state of having been helically bent. In FIG 8, the chain lines schematically represent positions where tensile stress remains. In particular, tensile stress remaining at points P is higher than tensile stress remaining at other positions. In the present embodiment, the stator core 11 is formed in a 48-gonal prism shape. Therefore, residual tensile stress, which is caused by the tensile deformation (i.e., bending deformation) of the band-shaped steel sheet 20, concentrates on corner portions of the stator core 11 which are included in the outer peripheral portion 26 of the back yoke 21.

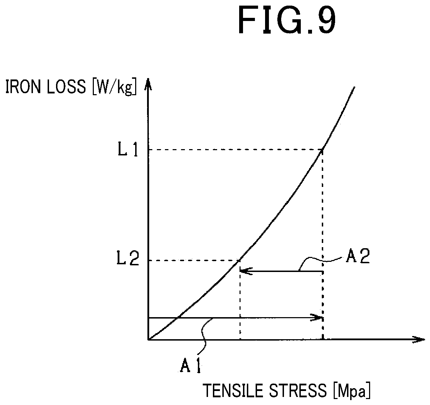

FIG 9 illustrates the relationship between the tensile stress remaining in the stator core 11 and the iron loss of the stator core 11. As shown in FIG 9, the iron loss of the stator core 11 increases with increase in the tensile stress remaining in the stator core 11. Specifically, when the band-shaped steel sheet 20 is helically bent, the tensile stress generated in the outer peripheral portion 26 of the back yoke 21 increases as indicated by the arrow A1. As a result, the iron loss of the stator core 11 increases to L1 due to the tensile stress remaining in the stator core 11 after the bending of the band-shaped steel sheet 20. Thereafter, the case 15 is shrink-fitted onto the radially outer periphery of the stator core 11. Consequently, as indicated by the arrow A2, the tensile stress remaining in the outer peripheral portion 26 of the back yoke 21 is reduced by the compression load applied by the case 15. As a result, the iron loss of the stator core 11 is reduced to L2.

According to the present embodiment described in detail above, it is possible to achieve the following advantageous effects.

In the present embodiment, the stator core 11 is formed by helically bending and laminating the band-shaped steel sheet 20. In other words, the stator core 11 is formed of the band-shaped steel sheet 20 that is helically bent and laminated. The stator core 11 has the slots 23 each opening at the radially inner periphery of the stator core 11 and spaced at predetermined intervals (more particularly, at equal intervals in the present embodiment) in the circumferential direction. The stator coil 12 is formed of the electrical conductor segments 30 that are inserted in the slots 23 of the stator core 11 and connected with one another.

Moreover, in the present embodiment, the band-shaped steel sheet 20 has the slits 25 each of which is formed, at a position corresponding to (more specifically, in radial alignment with) one of the slots 23, to be open to the corresponding slot 23. Therefore, when the band-shaped steel sheet 20 is helically bent and laminated to form the stator core 11, the band-shaped steel sheet 20 can be easily deformed such that the side surfaces 25a (i.e., the slit mating surfaces 25a) of each of the slits 25, which face each other, become closer to each other.

Furthermore, in the present embodiment, each of the electrical conductor segments 30 is substantially U-shaped and has the pair of leg portions 31 respectively inserted in the corresponding two slots 23 of the stator core 11 which are circumferentially apart from each other by two or more slot-pitches. In the state of being respectively inserted in the corresponding two slots 23 of the stator core 11, the pair of leg portions 31 apply to the stator core 11 forces in the directions of urging the pair of leg portions 31 to approach each other. Moreover, each corresponding pair of the leg portions 31, which respectively belong to two different electrical conductor segments 30, are joined to each other. In the state of being jointed to each other, each corresponding pair of the leg portions 31 also apply to the stator core 11 forces in the directions of urging the corresponding pair of the leg portions 31 to approach each other. Consequently, for the one or more slits 25 corresponding to the one or more slots 23 sandwiched between a connected or joined pair of the leg portions 31 of the electrical conductor segments 30, forces are applied by the connected or joined pair of the leg portions 31 to urge the slit mating surfaces 25a of each of the one or more slits 25 to become closer to each other. As a result, the slit mating surfaces 25a are suppressed from being separated from each other due to springback of the band-shaped steel sheet 20.

It should be noted that the above advantageous effects can be achieved regardless of the shape of the electrical conductor segments 30 and regardless of the manner of connecting the electrical conductor segments 30.

In addition, in the present embodiment, between the pair of leg portions 31 of each of the electrical conductor segments 30, there are interposed one or more slots 23. Moreover, for each of the slots 23, there is formed a corresponding one of the slits 25. Consequently, each of the electrical conductor segments 30 can exert the effect of suppressing separation of the slit mating surfaces 25a for one or more slits 25.

In the present embodiment, the number of the slots 23 formed in the stator core 11 is set to 48; and the number of the slits 25 formed in the stator core 11 is also set to 48. Consequently, it becomes possible to reduce the amount of deformation of the band-shaped steel sheet 20 at the positions corresponding to the slits 25 when the band-shaped steel sheet 20 is helically bent and laminated to form the stator core 11. As a result, it becomes possible to reduce the force of springback of the band-shaped steel sheet 20 while suppressing the magnetic properties of the stator core 11 from being lowered. Moreover, it becomes easy to increase the number of the slots 23 interposed between the pair of leg portions 31 of each of the electrical conductor segments 30; thus, it becomes possible to suppress separation of the slit mating surfaces 25a of each of the slits 25 using more than one electrical conductor segment 30.

In the present embodiment, the stator core 11 has a 48-gonal prism shape; and the case 15 is shrink-fitted (or fitted under pressure) on the radially outer periphery of the stator core 11. Consequently, the corner portions of the 48-gonal prism-shaped stator core 11 are compressed by the case 15, thereby reducing the residual tensile stress in the stator core 11 which is caused by the tensile deformation (i.e., bending deformation) of the band-shaped steel sheet 20. As a result, it becomes possible to improve the magnetic properties of the stator core 11.

The above-described embodiment can be modified as follows. Moreover, the above-described embodiment and the following modifications can also be implemented in combination with each other to the extent that there is no technical contradiction between them.

### [First Modification]

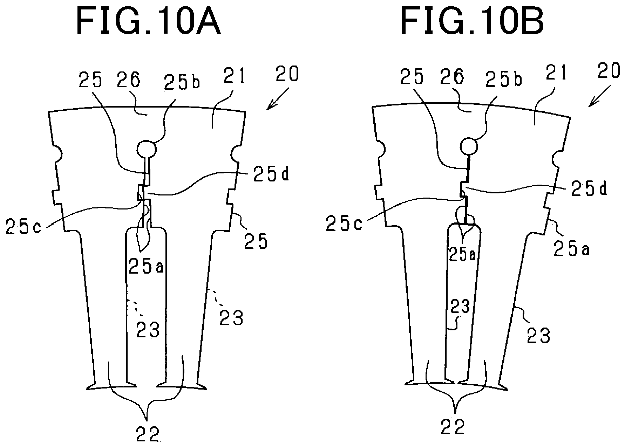

FIGS. 10A and 10B respectively show part of a band-shaped steel sheet 20 according to the first modification before and after the band-shaped steel sheet 20 is helically bent.

In the band-shaped steel sheet 20 according to this modification, as shown in FIG 10A, for each of the slits 25, a recess 25c is formed in one of the side surfaces 25a (i.e., the slit mating surfaces 25a) of the slit 25 which face each other, whereas a protrusion 25d is formed on the other of the side surfaces 25a.

Moreover, as shown in FIG 10B, the protrusion 25d is press-fitted into the recess 25c during the bending of the band-shaped steel sheet 20.

Consequently, with engagement between the recess 25c and the protrusion 25d, it becomes possible to more effectively suppress separation of the slit mating surfaces 25a from each other.

### [Second Modification]

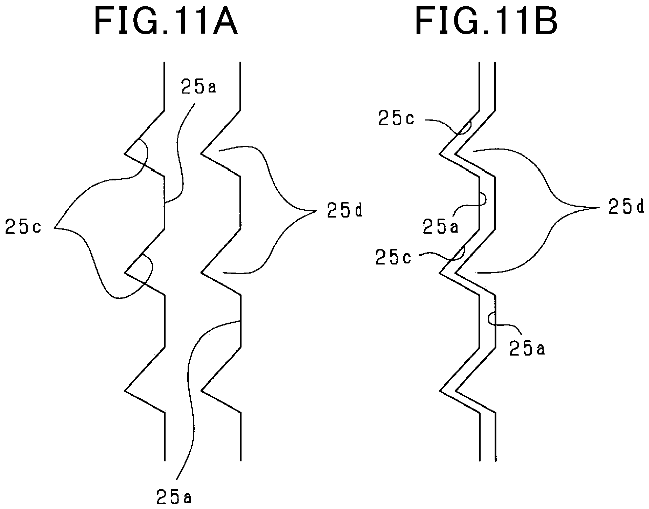

FIGS. 11A and 11B respectively show part of a band-shaped steel sheet 20 according to the second modification before and after the band-shaped steel sheet 20 is helically bent.

In the band-shaped steel sheet 20 according to this modification, as shown in FIG 11A, for each of the slits 25, a plurality of recesses 25c are formed in one of the slit mating surfaces 25a of the slit 25, whereas a plurality of protrusions 25d are formed on the other of the slit mating surfaces 25a. In addition, each of the recesses 25c and the protrusions 25d has a triangular shape.

Moreover, as shown in FIG 11B, the protrusions 25d are respectively fitted into the recesses 25c during the bending of the band-shaped steel sheet 20.

With the above configuration, the contact area and thus the friction force between the slit mating surfaces 25a can be increased, thereby more effectively suppressing separation of the slit mating surfaces 25a from each other.

### [Third Modification]

In the above-described second modification, each of the recesses 25c and the protrusions 25d has a triangular shape.

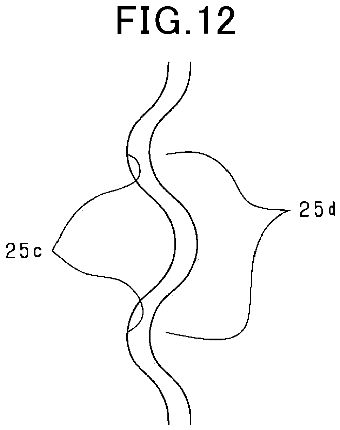

Alternatively, each of the recesses 25c and the protrusions 25d may have other shapes such as an arc shape (or round shape) as shown in FIG 12 or a trapezoidal shape (not shown).

### [Fourth Modification]

In the above-described second modification, all the recesses 25c are identical in shape to each other; and all the protrusions 25d respectively fitted in the recesses 25c are also identical in shape to each other.

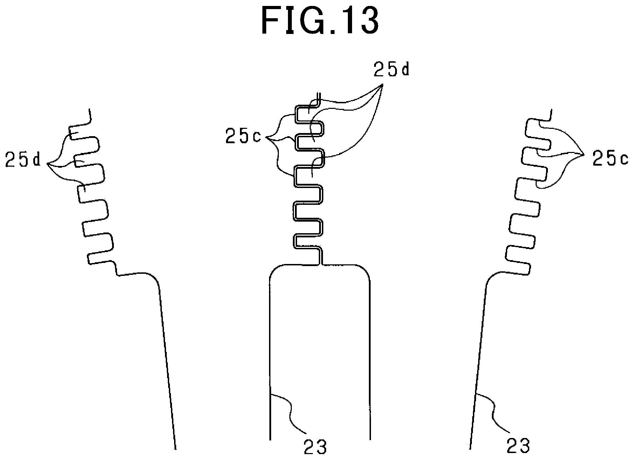

In contrast, in this modification, as shown in FIG 13, the recesses 25c are different in shape from each other; and the protrusions 25d respectively fitted in the recesses 25c are also different in shape from each other.

### [Fifth Modification]

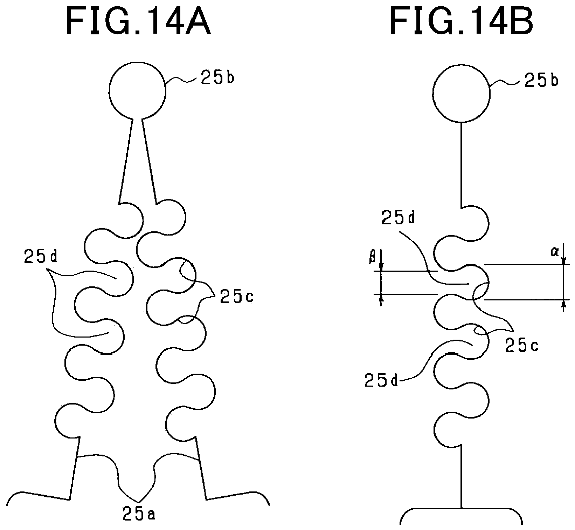

FIGS. 14A and 14B respectively show part of a band-shaped steel sheet 20 according to the fifth modification before and after the band-shaped steel sheet 20 is helically bent.

In the band-shaped steel sheet 20 according to this modification, as shown in FIG 14A, a plurality of recesses 25c and a plurality of protrusions 25d are alternately formed in each of the slit mating surfaces 25a of the slits 25.

Moreover, as shown in FIG 14B, an outer diameter α (or width) of the protrusions 25d is set to be greater than an interval β (or width) of entrances (or openings) of the recesses 25c. Furthermore, during the bending of the band-shaped steel sheet 20, for each of the slits 25, the protrusions 25d formed on a first one of the slit mating surfaces 25a of the slit 25 are respectively press-fitted into the recesses 25c formed in a second one of the slit mating surfaces 25a of the slit 25; and the protrusions 25d formed on the second slit mating surface 25a are respectively press-fitted into the recesses 25c formed in the first slit mating surface 25a.

With the above configuration, the contact area and thus the friction force between the slit mating surfaces 25a can be increased, thereby more effectively suppressing separation of the slit mating surfaces 25a from each other.

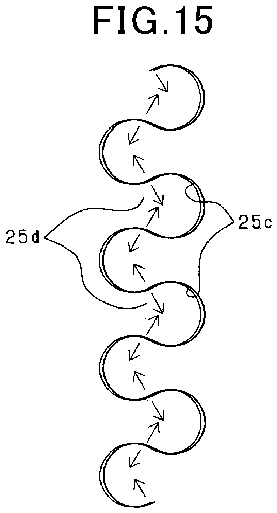

Furthermore, in this modification, in each of the slit mating surfaces 25a of the slits 25, the recesses 25c and the protrusions 25d are continuously formed without being spaced from one another. Consequently, as shown in FIG 15, after the bending of the band-shaped steel sheet 20, each adjacent pair of the protrusions 25d of the slit mating surfaces 25a apply reaction forces to each other, thereby more reliably suppressing separation of the slit mating surfaces 25a from each other.

### [Sixth Modification]

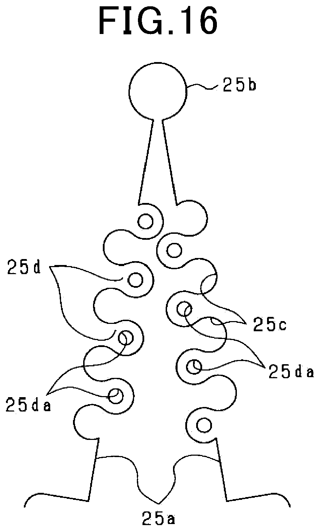

FIG 16 shows part of a band-shaped steel sheet 20 according to the sixth modification before the band-shaped steel sheet 20 is helically bent.

The band-shaped steel sheet 20 according to this modification differs from the band-shaped steel sheet 20 according to the fifth modification only in that in this modification, each of the protrusions 25d formed on the slit mating surfaces 25a of the slits 25 has a hole 25da formed therein.

Consequently, with the holes 25da formed in the protrusions 25d, it becomes possible to facilitate elastic deformation of the protrusions 25d, thereby facilitating insertion of the protrusions 25d into the respective recesses 25c.

### [Seventh Modification]

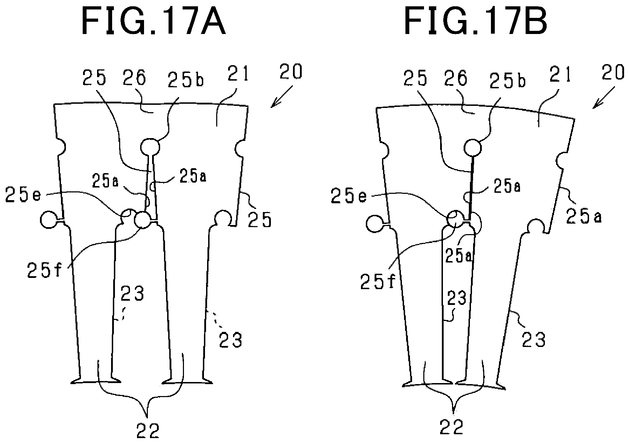

FIGS. 17A and 17B respectively show part of a band-shaped steel sheet 20 according to the seventh modification before and after the band-shaped steel sheet 20 is helically bent.

In the band-shaped steel sheet 20 according to this modification, as shown in FIG 17A, for each of the slits 25, a circular (or arc-shaped) indentation 25e is formed, as a first engagement portion, in one of the side surfaces 25a (i.e., the slit mating surfaces 25a) of the slit 25 which face each other; and a circular protrusion 25f is formed, as a second engagement portion, on the other of the side surfaces 25a.

Moreover, as shown in FIG 17B, the protrusion 25f is fitted into the indentation 25e during the bending of the band-shaped steel sheet 20; thus, the indentation 25e and the protrusion 25f are engaged with each other.

Consequently, with engagement between the indentation 25e and the protrusion 25f, it becomes possible to more effectively suppress separation of the slit mating surfaces 25a from each other.

### [Eighth Modification]

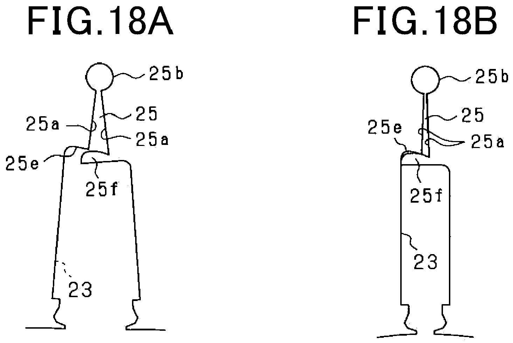

FIGS. 18A and 18B respectively showing part of a band-shaped steel sheet 20 according to the eighth modification before and after the band-shaped steel sheet 20 is helically bent.

In the band-shaped steel sheet 20 according to this modification, as shown in FIG 18A, for each of the slits 25, an acute-angled indentation 25e is formed, as a first engagement portion, in one of the side surfaces 25a (i.e., the slit mating surfaces 25a) of the slit 25 which face each other; and a protrusion 25f having an R portion (or round portion) is formed, as a second engagement portion, on the other of the side surfaces 25a.

Moreover, as shown in FIG 18B, the protrusion 25f is fitted into the indentation 25e during the bending of the band-shaped steel sheet 20; thus, the indentation 25e and the protrusion 25f are engaged with each other.

Consequently, with engagement between the indentation 25e and the protrusion 25f, it becomes possible to more effectively suppress separation of the slit mating surfaces 25a from each other.

### [Ninth Modification]

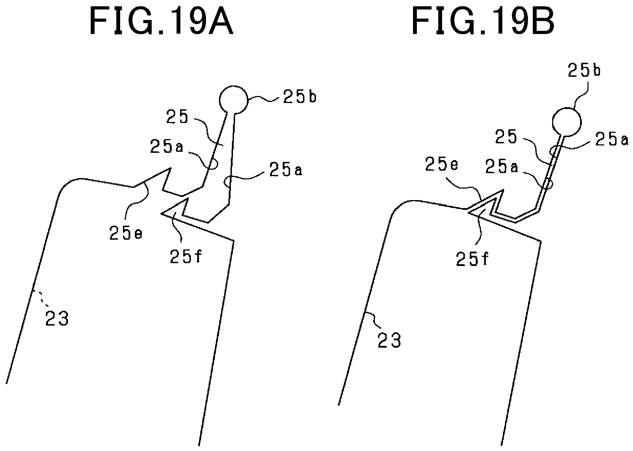

FIGS. 19A and 19B respectively show part of a band-shaped steel sheet 20 according to the ninth modification before and after the band-shaped steel sheet 20 is helically bent.

In the band-shaped steel sheet 20 according to this modification, as shown in FIG 19A, for each of the slits 25, a triangular indentation 25e is formed, as a first engagement portion, in the vicinity of one of the side surfaces 25a (i.e., the slit mating surfaces 25a) of the slit 25 which face each other; and a claw-shaped protrusion 25f is formed, as a second engagement portion, in the vicinity of the other of the side surfaces 25a.

Moreover, as shown in FIG 19B, the protrusion 25f is fitted into the indentation 25e during the bending of the band-shaped steel sheet 20; thus, the indentation 25e and the protrusion 25f are engaged (or interlocked) with each other.

Consequently, with engagement between the indentation 25e and the protrusion 25f, it becomes possible to more effectively suppress separation of the slit mating surfaces 25a from each other.

### [Tenth Modification]

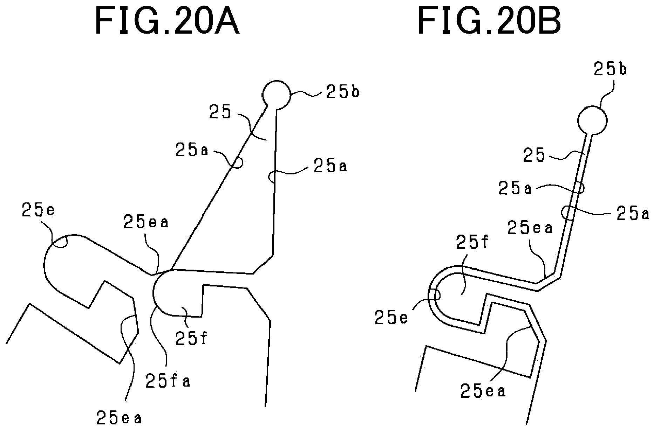

FIGS. 20A and 20B respectively show part of a band-shaped steel sheet 20 according to the tenth modification before and after the band-shaped steel sheet 20 is helically bent.

In this modification, as shown in FIG 20A, for each of the slits 25, an indentation 25e is formed, as a first engagement portion, in one of the side surfaces 25a (i.e., the slit mating surfaces 25a) of the slit 25 which face each other; and a protrusion 25f is formed, as a second engagement portion, on the other of the side surfaces 25a. Moreover, the indentation 25e has an opening portion 25ea that is tapered toward the inside of the indentation 25e. On the other hand, the protrusion 25f has an R portion (or round portion) 25fa formed at its distal end.

With the above configuration, when the indentation 25e and the protrusion 25f are brought into engagement with each other during the bending of the band-shaped steel sheet 20, the R portion 25fa of the protrusion 25f can slide against the tapered opening portion 25ea of the indentation 25e, thereby facilitating insertion of the protrusion 25f into the indentation 25e.

### [Eleventh Modification]

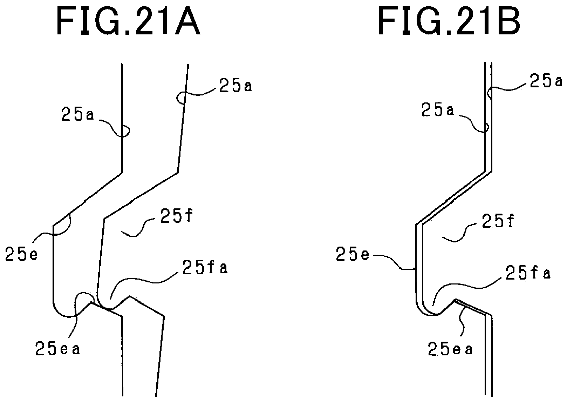

The indentation 25e (i.e., the first engagement portion) and the protrusion 25f (i.e., the second engagement portion) described in the tenth modification (see FIGS. 20A and 20B) may alternatively be shaped as shown in FIGS. 21A and 21B.

### [Twelfth Modification]

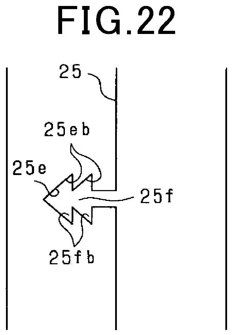

FIG 22 shows part of a band-shaped steel sheet 20 according to the twelfth modification after the band-shaped steel sheet 20 is helically bent.

In this modification, as shown in FIG 22, for each of the slits 25, an indentation 25e is formed, as a first engagement portion, in one of the side surfaces 25a (i.e., the slit mating surfaces 25a) of the slit 25 which face each other; and a protrusion 25f is formed, as a second engagement portion, on the other of the side surfaces 25a. Moreover, the indentation 25e has a plurality of stages of corner portions 25eb; and the protrusion 25f has a plurality of stages of claws 25fb.

With the above configuration, after the indentation 25e and the protrusion 25f are brought into engagement with each other, it is difficult for the protrusion 25f to be displaced out of the indentation 25e. Consequently, it becomes possible to more effectively suppress separation of the slit mating surfaces 25a from each other.

### [Thirteenth Modification]

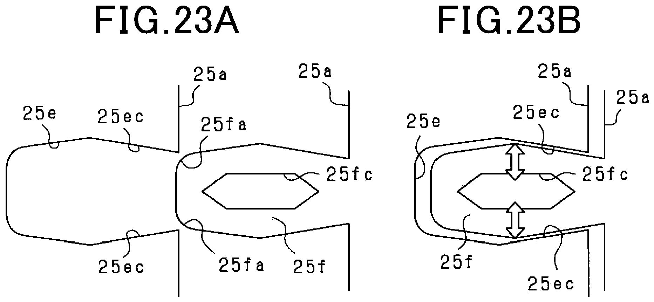

FIGS. 23A and 23B respectively show part of a band-shaped steel sheet 20 according to the thirteenth modification before and after the band-shaped steel sheet 20 is helically bent.

In this modification, as shown in FIG 23A, for each of the slits 25, an indentation 25e is formed, as a first engagement portion, in one of the side surfaces 25a (i.e., the slit mating surfaces 25a) of the slit 25 which face each other; and a protrusion 25f is formed, as a second engagement portion, on the other of the side surfaces 25a. Moreover, the indentation 25e has an opening portion 25ec that is tapered toward outside of the indentation 25e. On the other hand, the protrusion 25f has an R portion (or round portion) 25fa formed at its distal end. In addition, a hole 25fc is formed in the protrusion 25f.

With the above configuration, when the indentation 25e and the protrusion 25f are brought into engagement with each other during the bending of the band-shaped steel sheet 20, the protrusion 25f can be easily elastically deformed due to the hole 25fc formed therein; thus, the protrusion 25f can be easily inserted into the indentation 25e.

Moreover, as shown in FIG 23B, after the indentation 25e and the protrusion 25f are brought into engagement with each other, it is difficult for the protrusion 25f to be displaced out of the indentation 25e due to the opening portion 25ec of the indentation 25e which is tapered toward outside of the indentation 25e. Consequently, it becomes possible to more effectively suppress separation of the slit mating surfaces 25a from each other.

### [Fourteenth Modification]

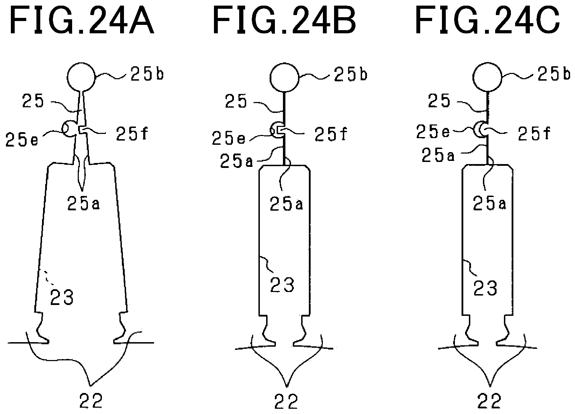

In this modification, as shown in FIG 24A, for each of the slits 25, a circular (or arc-shaped) indentation 25e is formed, as a first engagement portion, in one of the side surfaces 25a (i.e., the slit mating surfaces 25a) of the slit 25 which face each other; and a rectangular (more specifically, rectangular-solid-shaped) protrusion 25f is formed, as a second engagement portion, on the other of the side surfaces 25a. The protrusion 25f has a width less than an opening width of the indentation 25e.

Moreover, as shown in FIG 24B, the protrusion 25f is inserted into the indentation 25e during the bending of the band-shaped steel sheet 20. Then, the protrusion 25f is plastically deformed so that as shown in FIG 24C, the width of the protrusion 25f becomes greater than the opening width of the indentation 25e. Consequently, it becomes possible to more effectively suppress separation of the slit mating surfaces 25a from each other.

### [Fifteenth Modification]

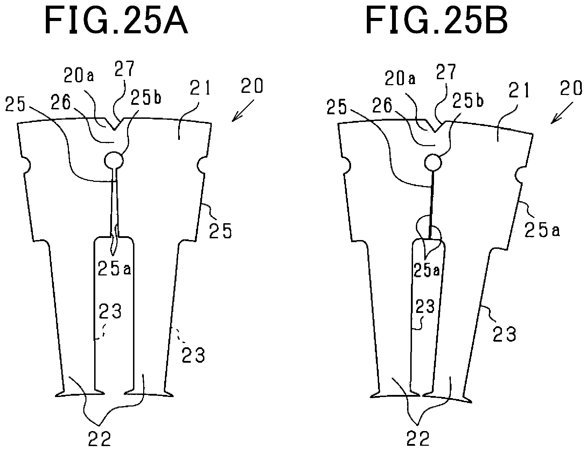

FIGS. 25A and 25B respectively show part of a band-shaped steel sheet 20 according to the fifteenth modification before and after the band-shaped steel sheet 20 is helically bent.

In the band-shaped steel sheet 20 according to this modification, for each of the slits 25, there is formed an indentation 27 in an outer edge portion 20a of the band-shaped steel sheet 20 at a position corresponding to (more specifically, in radial alignment with) the end (or the circular hole 25b) of the slit 25 on the opposite side to the corresponding slot 23. In addition, the indentation 27 may have, for example, a V-shape or a U-shape.

With the above configuration, it becomes possible to reduce the volume of that portion (i.e., outer edge portion 20a) of the band-shaped steel sheet 20 where tensile stress remains; the tensile stress is generated when the band-shaped steel sheet 20 is helically bent and laminated to form the stator core 11. Consequently, it becomes possible to reduce the amount of springback of the band-shaped steel sheet 20.

### [Sixteenth Modification]

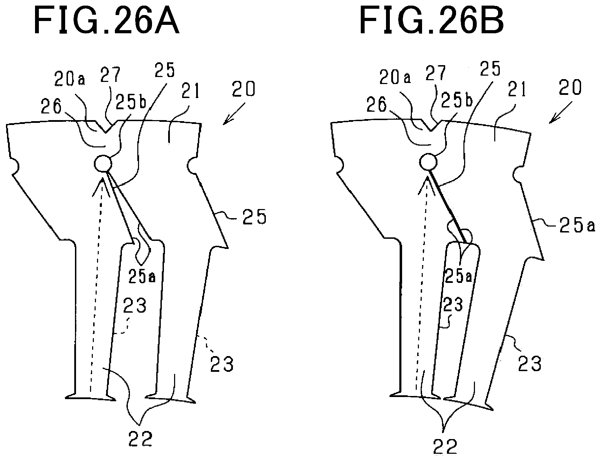

FIGS. 26A and 26B respectively show part of a band-shaped steel sheet 20 according to the sixteenth modification before and after the band-shaped steel sheet 20 is helically bent.

In the band-shaped steel sheet 20 according to this modification, for each of the slits 25, the end (or the circular hole 25b) of the slit 25 on the opposite side to the corresponding slot 23 is located radially outside and in radial alignment with a corresponding one of the teeth 22, as indicated by dashed-line arrows in FIGS. 26A and 26B. That is, the end of the slit 25 on the opposite side to the corresponding slot 23 is circumferentially offset from the corresponding slot 23. On the other hand, the end (or the opening) of the slit 25 on the side of the corresponding slot 23 is located radially outside and in radial alignment with the corresponding slot 23.

In addition, in this modification, for each of the slits 25, there is formed an indentation 27 in an outer edge portion 20a of the band-shaped steel sheet 20 at a position corresponding to (more specifically, in radial alignment with) the end (or the circular hole 25b) of the slit 25 on the opposite side to the corresponding slot 23, as in the fifteenth modification.

With the configuration of the band-shaped steel sheet 20 according to this modification, when magnetic flux flowing through the back yoke 21 in the circumferential direction is blocked by the indentation 27 formed in the outer edge portion 20a of the band-shaped steel sheet 20 and the circular hole 25b, the magnetic flux can be bypassed to that part of the back yoke 21 which is radially interposed between the circular hole 25b and the corresponding tooth 22, thereby being allowed to continue flowing in the circumferential direction. Consequently, it becomes possible to suppress the magnetic properties of the stator core 11 from being lowered due to magnetic saturation.

### [Seventeenth Modification]

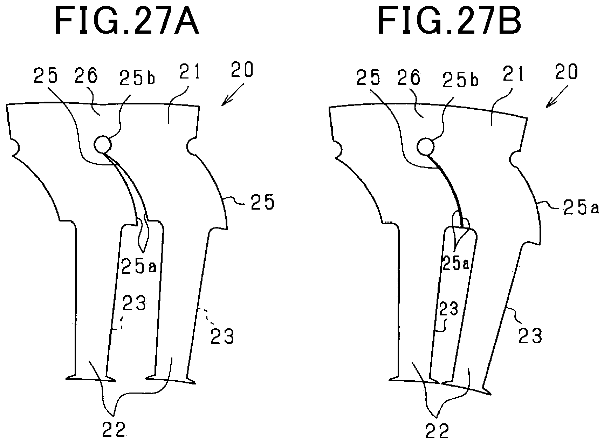

FIGS. 27A and 27B respectively show part of a band-shaped steel sheet 20 according to the seventeenth modification before and after the band-shaped steel sheet 20 is helically bent.

In the band-shaped steel sheet 20 according to this modification, for each of the slits 25, the side surfaces 25a (i.e., the slit mating surfaces 25a) of the slit 25 which face each other are arc-shaped. Moreover, the radii of curvature of the side surfaces 25a are set to be equal to each other.

With the above configuration, when the band-shaped steel sheet 20 is helically bent and laminated to form the stator core 11, the difference in shape between the slit mating surfaces 25a due to manufacturing tolerances can be easily absorbed by the slit mating surfaces 25a being deformed to change the curvatures thereof. Consequently, the entire slit mating surfaces 25a can be easily brought into intimate contact with each other, thereby improving the magnetic properties of the stator core 11.

### [Eighteenth Modification]

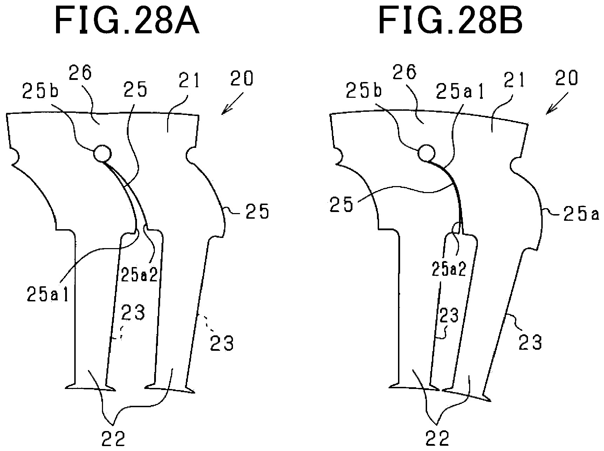

FIGS. 28A and 28B respectively show part of a band-shaped steel sheet 20 according to the eighteenth modification before and after the band-shaped steel sheet 20 is helically bent.

Hereinafter, for the sake of convenience of explanation, the pair of side surfaces 25a (i.e., the pair of slit mating surfaces 25a) of each of the slits 25 will be respectively referred to as the first side surface 25a1 and the second side surface 25a2; the second side surface 25a2 is deformed later than the first side surface 25a1 when the band-shaped steel sheet 20 is helically bent and laminated to form the stator core 11.

The band-shaped steel sheet 20 according to this modification differs from the band-shaped steel sheet 20 according to the seventeenth modification only in that in this modification, for each of the slits 25, the radius of curvature of the second side surface 25a2 of the slit 25 is set to be greater than the radius of curvature of the first side surface 25a1 of the slit 25.

With the above configuration, when the band-shaped steel sheet 20 is helically bent and laminated to form the stator core 11, the second side surface 25a2 can be deformed in such as manner as to conform to the first side surface 25a1. Consequently, the entire slit mating surfaces 25a1 and 25a2 can be more easily brought into intimate contact with each other, thereby improving the magnetic properties of the stator core 11.

### [Nineteenth Modification]

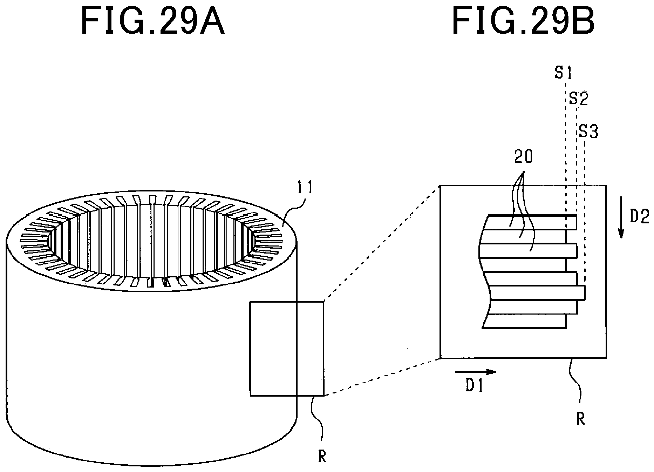

FIG 29A is a perspective view of a stator core 11 according to the nineteenth modification. FIG 29B is an enlarged view of a part R of FIG 29A.

In this modification, the positions of outer circumferential surfaces S1, S2 and S3 of layers of the helically-laminated band-shaped steel sheet 20 in the radial direction D1 vary in the lamination direction D2 (i.e., the axial direction).

With the above configuration, it becomes possible to increase the area of the radially outer surface of the entire stator core 11, thereby improving the heat dissipation performance of the stator core 11.

In addition, in this modification, the stator core 11 may be placed in the case 15 (see FIG 2) and fixed to the case 15 by, for example, bolts or screws.

### [Twentieth Modification]

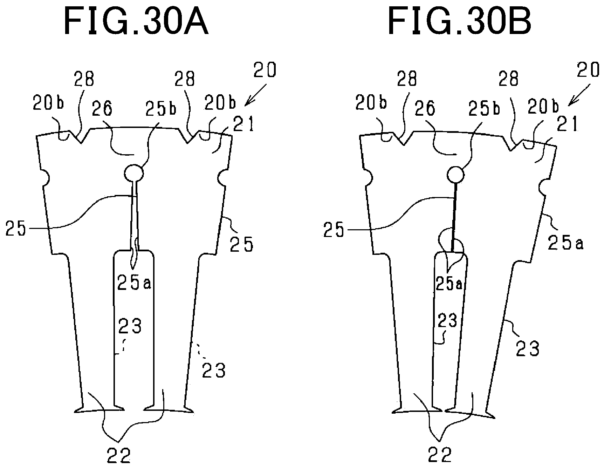

FIGS. 30A and 30B respectively show part of a band-shaped steel sheet 20 according to the twentieth modification before and after the band-shaped steel sheet 20 is helically bent.

In the band-shaped steel sheet 20 according to this modification, for each of the slits 25, there is formed an indentation 28 in an outer edge portion 20b of the band-shaped steel sheet 20 at a position circumferentially offset from an imaginary line that extends radially outward from the end (or the circular hole 25b) of the slit 25 on the opposite side to the corresponding slot 23. In addition, the indentation 28 may have, for example, a V-shape, a U-shape, a trapezoidal shape or a rectangular shape.

With the above configuration, it becomes possible to reduce the volume of that portion (i.e., outer edge portion 20b) of the band-shaped steel sheet 20 where tensile stress remains; the tensile stress is generated when the band-shaped steel sheet 20 is helically bent and laminated to form the stator core 11. Consequently, it becomes possible to reduce the amount of springback of the band-shaped steel sheet 20.

Moreover, with the above configuration, the indentation 28 is formed at the position circumferentially offset from the imaginary line that extends from the end of the slit 25 in the radially outward direction, i.e., in the longitudinal direction of the slit 25. Consequently, compared to the configuration where the indentation 27 is formed at a position on the imaginary line extending in the longitudinal direction of the slit 25 (see FIGS. 25A and 25B), it becomes difficult for the band-shaped steel sheet 20 to be broken due to development of cracks from the indentation 28 to the slit 25.

### [Twenty-first Modification]

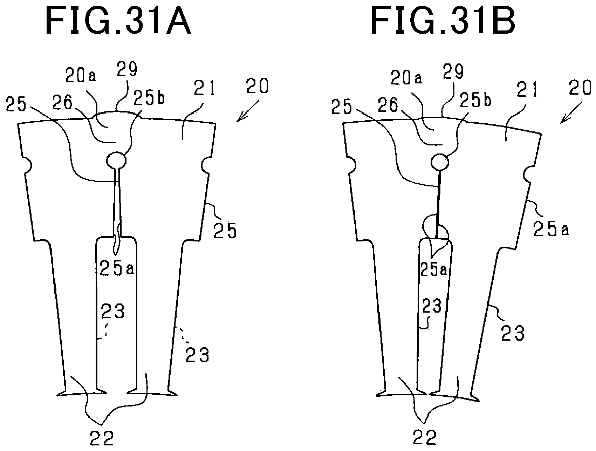

FIGS. 31A and 31B respectively show part of a band-shaped steel sheet 20 according to the twenty-first modification before and after the band-shaped steel sheet 20 is helically bent.

In the band-shaped steel sheet 20 according to this modification, for each of the slits 25, there is formed a protrusion 29 that protrudes radially outward from an outer edge portion 20a of the band-shaped steel sheet 20 at a position corresponding to (more specifically, in radial alignment with) the end (or the circular hole 25b) of the slit 25 on the opposite side to the corresponding slot 23. In addition, the protrusion 29 may have, for example, a semi-elliptical shape or a rectangular shape.

With the above configuration, it becomes possible to increase the radial width of the outer peripheral portion 26 of the back yoke 21, thereby relaxing stress concentration on the outer peripheral portion 26 due to the bending of the band-shaped steel sheet 20. Consequently, it becomes possible to prevent the outer peripheral portion 26 from being broken due to stress concentration on the outer peripheral portion 26.

Moreover, with the above configuration, it becomes possible to suppress reduction in the radial width of the outer peripheral portion 26 of the back yoke 21 when the outer peripheral portion 26 is stretched in the circumferential direction.

In addition, the outer peripheral portion 26 denotes a portion of the back yoke 21 which extends between the ends (or the circular holes 25b) of the slits 25 on the opposite side to the corresponding slots 23 and the radially outer edge of the back yoke 21.

### [Twenty-second Modification]

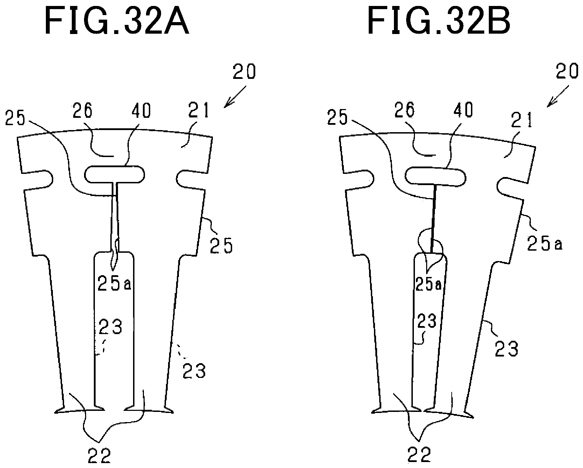

FIGS. 32A and 32B respectively show part of a band-shaped steel sheet 20 according to the twenty-second modification before and after the band-shaped steel sheet 20 is helically bent.

In the band-shaped steel sheet 20 according to this modification, for each of the slits 25, there is formed a circumferential slit 40 that extends, from the end of the slit 25 on the opposite side to the corresponding slot 23, to both sides in the circumferential direction. In addition, the circumferential slit 40 may have, for example, a flat oval shape, an elliptical shape, a rectangular shape, or an inverted triangular shape.

With the above configuration, it becomes possible to expand the area where stress concentration occurs due to the bending of the band-shaped steel sheet 20 to the area where the circumferential slit 40 is formed. Consequently, it becomes possible to reduce the average stress in the area where stress concentration occurs due to the bending of the band-shaped steel sheet 20. As a result, it becomes possible to prevent the outer peripheral portion 26 of the back yoke 21 from being broken due to stress concentration on the outer peripheral portion 26.

### [Twenty-third Embodiment]

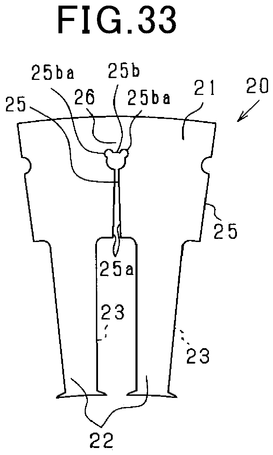

In a band-shaped steel sheet 20 according to this modification, as shown in FIG 33, for each of the slits 25, there is formed a circular hole 25b at an end of the slit 25 on the opposite side to the corresponding slot 23. Further, a pair of small circular holes 25ba are formed so as to be connected with portions of the circular hole 25b which are away from an end of the circular hole 25b on the opposite side to the slit 25 (or to the corresponding slot 23); and the pair of small circular holes 25ba are smaller than the circular hole 25b.

With the above configuration, it becomes possible to expand the area where stress concentration occurs due to the bending of the band-shaped steel sheet 20 to those areas where the small circular holes 25ba are formed. Consequently, it becomes possible to reduce the average stress in the area where stress concentration occurs due to the bending of the band-shaped steel sheet 20. As a result, it becomes possible to prevent the outer peripheral portion 26 of the back yoke 21 from being broken due to stress concentration on the outer peripheral portion 26.

In addition, the number of the small circular holes 25ba is not limited to two, but may alternatively be one, or three or more. Moreover, the small circular holes 25ba may have any size smaller than that of the circular hole 25b. Furthermore, the small circular holes 25ba may have the same size or different sizes from each other.

### [Twenty-fourth Embodiment]

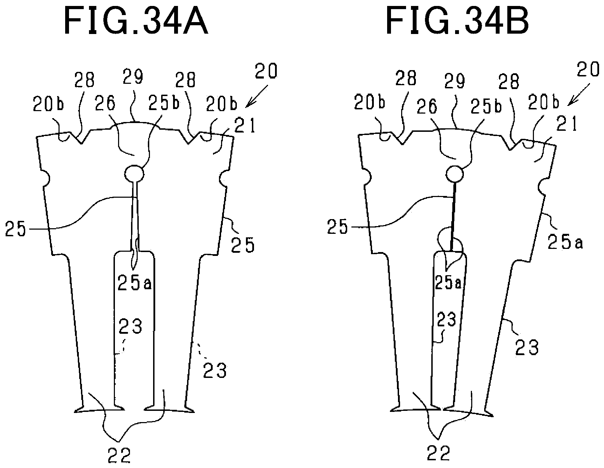

FIGS. 34A and 34B respectively show part of a band-shaped steel sheet 20 according to the twenty-fourth modification before and after the band-shaped steel sheet 20 is helically bent.

The band-shaped steel sheet 20 according to this modification is a combination of the band-shaped steel sheet 20 according to the twentieth modification (see FIGS. 30A and 30B) and the band-shaped steel sheet 20 according to the twenty-first modification (see FIGS. 31A and 31B).

That is, in the band-shaped steel sheet 20 according to this modification, for each of the slits 25, there are formed both an indentation 28 as described in the twentieth modification and a protrusion 29 as described in the twenty-first modification.

Consequently, it becomes possible to achieve both the advantageous effects achievable with the indentation 28 and the advantageous effects achievable with the protrusion 29.

### [Twenty-fifth Modification]

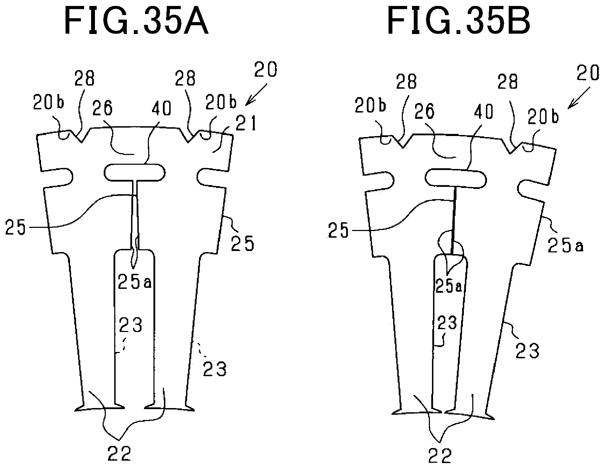

FIGS. 35A and 35B respectively show part of a band-shaped steel sheet 20 according to the twenty-fifth modification before and after the band-shaped steel sheet 20 is helically bent.

The band-shaped steel sheet 20 according to this modification is a combination of the band-shaped steel sheet 20 according to the twentieth modification (see FIGS. 30A and 30B) and the band-shaped steel sheet 20 according to the twenty-second modification (see FIGS. 32A and 32B).

That is, in the band-shaped steel sheet 20 according to this modification, for each of the slits 25, there are formed both an indentation 28 as described in the twentieth modification and a circumferential slit 40 as described in the twenty-second modification.

Consequently, it becomes possible to achieve both the advantageous effects achievable with the indentation 28 and the advantageous effects achievable with the circumferential slit 40.

### [Twenty-sixth Modification]

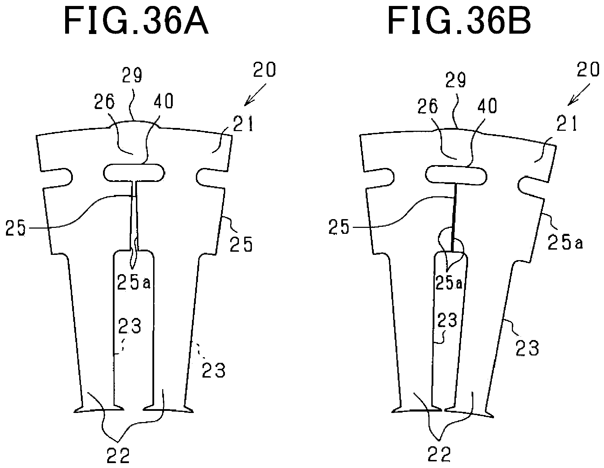

FIGS. 36A and 36B respectively show part of a band-shaped steel sheet 20 according to the twenty-sixth modification before and after the band-shaped steel sheet 20 is helically bent.

The band-shaped steel sheet 20 according to this modification is a combination of the band-shaped steel sheet 20 according to the twenty-first modification (see FIGS. 31A and 31B) and the band-shaped steel sheet 20 according to the twenty-second modification (see FIGS. 32A and 32B).

That is, in the band-shaped steel sheet 20 according to this modification, for each of the slits 25, there are formed both a protrusion 29 as described in the twenty-first modification and a circumferential slit 40 as described in the twenty-second modification.

Consequently, it becomes possible to achieve both the advantageous effects achievable with the protrusion 29 and the advantageous effects achievable with the circumferential slit 40.

### [Twenty-seventh Modification]

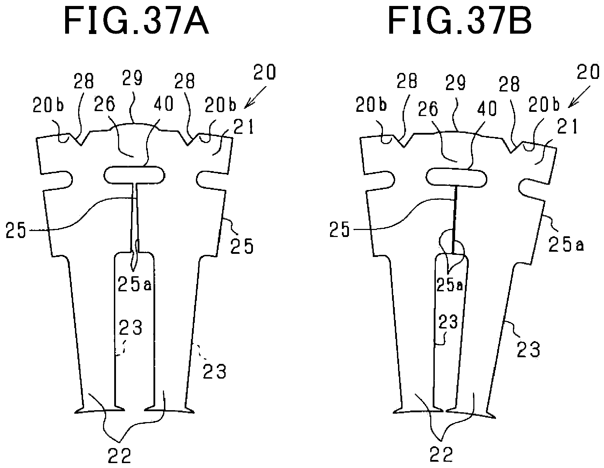

FIGS. 37A and 37B respectively show part of a band-shaped steel sheet 20 according to the twenty-seventh modification before and after the band-shaped steel sheet 20 is helically bent.

The band-shaped steel sheet 20 according to this modification is a combination of the band-shaped steel sheet 20 according to the twentieth modification (see FIGS. 30A and 30B), the band-shaped steel sheet 20 according to the twenty-first modification (see FIGS. 31A and 31B) and the band-shaped steel sheet 20 according to the twenty-second modification (see FIGS. 32A and 32B).

That is, in the band-shaped steel sheet 20 according to this modification, for each of the slits 25, there are formed an indentation 28 as described in the twentieth modification, a protrusion 29 as described in the twenty-first modification and a circumferential slit 40 as described in the twenty-second modification.

Consequently, it becomes possible to achieve all of the advantageous effects achievable with the indentation 28, the advantageous effects achievable with the protrusion 29 and the advantageous effects achievable with the circumferential slit 40.

### [Twenty-eighth Modification]

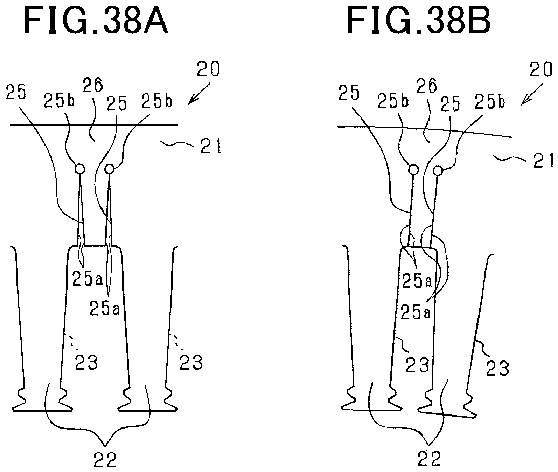

FIGS. 38A and 38B respectively show part of a band-shaped steel sheet 20 according to the twenty-eighth modification before and after the band-shaped steel sheet 20 is helically bent.

In the band-shaped steel sheet 20 according to this modification, for each of the slots 23, there are formed, at positions corresponding to (more specifically, in radial alignment with) the slot 23, two slits 25 that are open to the slot 23.

With the above configuration, for each of the slots 23, forces are applied by the connected or joined pair of the leg portions 31 of the electrical conductor segments 30, between which the slot 23 is interposed, to urge the slit mating surfaces 25a of each of the two slits 25 corresponding to the slot 23 to become closer to each other. As a result, the slit mating surfaces 25a are suppressed from being separated from each other due to springback of the band-shaped steel sheet 20.

### [Twenty-ninth Modification]

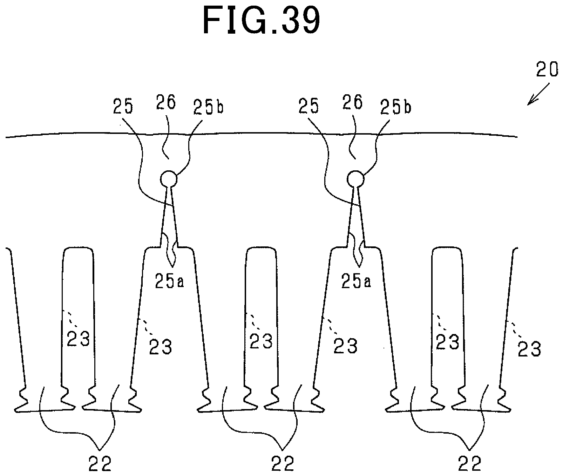

FIG 39 shows part of a band-shaped steel sheet 20 according to the twenty-ninth modification before the band-shaped steel sheet 20 is helically bent.

In the band-shaped steel sheet 20 according to this modification, for each of only some of the slots 23, there is formed, at a position corresponding to (more specifically, in radial alignment with) the slot 23, a slit 25 that is open to the slot 23.

With the above configuration, for each of the some of the slots 23, forces are applied by the connected or joined pair of the leg portions 31 of the electrical conductor segments 30, between which the slot 23 is interposed, to urge the slit mating surfaces 25a of the slit 25 corresponding to the slot 23 to become closer to each other. As a result, the slit mating surfaces 25a are suppressed from being separated from each other due to springback of the band-shaped steel sheet 20.

### [Thirtieth Modification]

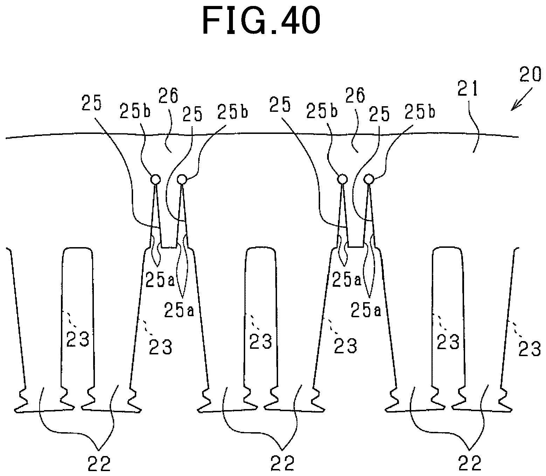

FIG 40 shows part of a band-shaped steel sheet 20 according to the thirtieth modification before the band-shaped steel sheet 20 is helically bent.

The band-shaped steel sheet 20 according to this modification is a combination of the band-shaped steel sheet 20 according to the twenty-eighth modification (see FIGS. 38A and 38B) and the band-shaped steel sheet 20 according to the twenty-ninth modification (see FIG 39).

That is, in the band-shaped steel sheet 20 according to this modification, for each of only some of the slots 23, there are formed, at positions corresponding to (more specifically, in radial alignment with) the slot 23, two slits 25 that are open to the slot 23.

With the above configuration, for each of the some of the slots 23, forces are applied by the connected or joined pair of the leg portions 31 of the electrical conductor segments 30, between which the slot 23 is interposed, to urge the slit mating surfaces 25a of each of the two slits 25 corresponding to the slot 23 to become closer to each other. As a result, the slit mating surfaces 25a are suppressed from being separated from each other due to springback of the band-shaped steel sheet 20.

### [Other Modifications]

(1) Although not shown in the drawings, a band-shaped steel sheet 20 may be obtained by combining the band-shaped steel sheet 20 according to the twentieth modification (see FIGS. 30A and 30B) and the band-shaped steel sheet 20 according to the twenty-third modification (see FIG 33). That is, in the band-shaped steel sheet 20, for each of the slits 25, there may be formed an indentation 28 as described in the twentieth modification and a circular hole 25b and a pair of small circular holes 25ba as described in the twenty-third modification. In this case, it will become possible to achieve both the advantageous effects achievable with the indentation 28 and the advantageous effects achievable with the circular holes 25b and 25ba.
(2) Although not shown in the drawings, a band-shaped steel sheet 20 may be obtained by combining the band-shaped steel sheet 20 according to the twenty-first modification (see FIGS. 31A and 31B) and the band-shaped steel sheet 20 according to the twenty-third modification (see FIG 33). That is, in the band-shaped steel sheet 20, for each of the slits 25, there may be formed a protrusion 29 as described in the twenty-first modification and a circular hole 25b and a pair of small circular holes 25ba as described in the twenty-third modification. In this case, it will become possible to achieve both the advantageous effects achievable with the protrusion 29 and the advantageous effects achievable with the circular holes 25b and 25ba.
(3) Although not shown in the drawings, a band-shaped steel sheet 20 may be obtained by combining the band-shaped steel sheet 20 according to the twentieth modification (see FIGS. 30A and 30B), the band-shaped steel sheet 20 according to the twenty-first modification (see FIGS. 31A and 31B) and the band-shaped steel sheet 20 according to the twenty-third modification (see FIG 33). That is, in the band-shaped steel sheet 20, for each of the slits 25, there may be formed an indentation 28 as described in the twentieth modification, a protrusion 29 as described in the twenty-first modification and a circular hole 25b and a pair of small circular holes 25ba as described in the twenty-third modification. In this case, it will become possible to achieve all of the advantageous effects achievable with the indentation 28, the advantageous effects achievable with the protrusion 29 and the advantageous effects achievable with the circular holes 25b and 25ba.

While the above particular embodiment and modifications have been shown and described, it will be understood by those skilled in the art that various further modifications, changes, and improvements may be made without departing from the spirit of the present disclosure.

A stator (10) for a rotating electric machine includes a stator core (11) and a stator coil (12). The stator core is formed of a band-shaped steel sheet (20) that is helically bent and laminated. The stator core has a plurality of slots (23) each opening at an inner periphery of the stator core and spaced from one another in a circumferential direction. The stator coil is formed of a plurality of electrical conductor segments (30) that are inserted in the slots of the stator core and connected with one another. Moreover, the band-shaped steel sheet has a plurality of slits (25) each of which is formed, at a position corresponding to one of the slots, to be open to the corresponding slot. Each of the electrical conductor segments is substantially U-shaped and has a pair of leg portions (31) respectively inserted in corresponding two of the slots of the stator core; the corresponding two slots are circumferentially apart from each other by two or more slot-pitches.

## Claims

1. A stator (10) for a rotating electric machine, the stator comprising:
a stator core (11) formed of a band-shaped steel sheet (20) that is helically bent and laminated, the stator core having a plurality of slots (23) each opening at an inner periphery of the stator core and spaced from one another in a circumferential direction; and
a stator coil (12) formed of a plurality of electrical conductor segments (30), the electrical conductor segments having respective leg portions (31) inserted in the slots of the stator core and connected with one another,
wherein:
in the band-shaped steel sheet, for each of at least some of the slots, there is formed at least one slit (25), at a position corresponding to the slot, to be open to the slot; and
at one or more locations in the stator, a pair of the leg portions of the electrical conductor segments are connected with each other across at least one of those slots for each of which the at least one slit is formed to be open to the slot.

2. A stator (10) for a rotating electric machine, the stator comprising:
a stator core (11) formed of a band-shaped steel sheet (20) that is helically bent and laminated, the stator core having a plurality of slots (23) each opening at an inner periphery of the stator core and spaced from one another in a circumferential direction; and
a stator coil (12) formed of a plurality of electrical conductor segments (30) that are inserted in the slots of the stator core and connected with one another,
wherein:
the band-shaped steel sheet has a plurality of slits (25) each of which is formed, at a position corresponding to one of the slots, to be open to the corresponding slot; and
each of the electrical conductor segments is substantially U-shaped and has a pair of leg portions (31) respectively inserted in corresponding two of the slots of the stator core, the corresponding two slots being circumferentially apart from each other by two or more slot-pitches.

3. The stator as set forth in Claim 1 or 2, wherein:
each of the slits has a pair of side surfaces (25a) facing each other;
a recess (25c) is formed in one of the pair of side surfaces, and a protrusion (25d) is formed on the other of the pair of side surfaces; and
the protrusion is press-fitted in the recess.

4. The stator as set forth in Claim 1 or 2, wherein:
each of the slits has a pair of side surfaces (25a) facing each other;
a first engagement portion (25e) is formed in one of the pair of side surfaces, and a second engagement portion (25f) is formed in the other of the pair of side surfaces; and
the first engagement portion and the second engagement portion are engaged with each other.

5. The stator as set forth in Claim 1 or 2, wherein:
for each of the slits, there is formed an indentation (27) in an outer edge portion (20a) of the band-shaped steel sheet at a position corresponding to an end (25b) of the slit on an opposite side to the corresponding slot.

6. The stator as set forth in Claim 5, wherein:
the stator core has a back yoke (21) extending in the circumferential direction and a plurality of teeth (22) extending radially inward from the back yoke and spaced from one another in the circumferential direction;
each of the slots is formed between a circumferentially-adjacent pair of the teeth; and
for each of the slits, the end of the slit on the opposite side to the corresponding slot is located radially outside and in radial alignment with a corresponding one of the teeth.

7. The stator as set forth in Claim 1 or 2, wherein:
each of the number of the slots and the number of the slits is greater than or equal to 48.

8. The stator as set forth in Claim 1 or 2, wherein:
each of the slits has a pair of side surfaces (25a, 25a1, 25a2) facing each other; and
each of the pair of side surfaces is arc-shaped.

9. The stator as set forth in Claim 8, wherein:
the pair of side surfaces facing each other consists of a first side surface (25a1) and a second side surface (25a2) that is deformed later than the first side surface when the band-shaped steel sheet is helically bent and laminated to form the stator core; and
a radius of curvature of the second side surface is set to be greater than a radius of curvature of the first side surface.

10. The stator as set forth in Claim 1 or 2, wherein:
the stator core has a polygonal prism shape; and
a case (15) is fitted under pressure on an outer periphery of the stator core.

11. The stator as set forth in Claim 1 or 2, wherein:
radial positions of outer circumferential surfaces (S1, S2, S3) of a plurality of layers of the helically-laminated band-shaped steel sheet vary in a lamination direction (D2) of the band-shaped steel sheet.

12. The stator as set forth in Claim 1 or 2, wherein:
for each of the slits, there is formed an indentation (28) in an outer edge portion (20b) of the band-shaped steel sheet at a position circumferentially offset from an imaginary line that extends radially outward from an end (25b) of the slit on an opposite side to the corresponding slot.

13. The stator as set forth in Claim 1 or 2, wherein:
for each of the slits, there is formed a protrusion (29) that protrudes radially outward from an outer edge portion (20a) of the band-shaped steel sheet at a position corresponding to an end (25b) of the slit on an opposite side to the corresponding slot.

14. The stator as set forth in Claim 1 or 2, wherein:
for each of the slits, there is formed a circumferential slit (40) that extends, from an end of the slit on an opposite side to the corresponding slot, to both sides in the circumferential direction.

15. The stator as set forth in Claim 1 or 2, wherein:
for each of the slits, there is formed a first circular hole (25b) at an end of the slit on an opposite side to the corresponding slot;
at least one second circular hole (25ba) is formed so as to be connected with a portion of the first circular hole which is away from an end of the first circular hole on an opposite side to the slit; and
the at least one second circular hole is smaller than the first circular hole.
